# EUROPEAN PATENT SPECIFICATION

(11) **EP 2 731 251 B1**
(45) Date of publication and mention of the grant of the patent: **02.10.2019**
(21) Application number: 12839168.7
(22) Date of filing: 26.10.2012
(51) Int. Cl.: H02M 7/48

(54) **INVERTER CIRCUIT AND CONTROL METHOD THEREFOR, AND INVERTER CIRCUIT CONTROL DEVICE**
UMRICHTERSCHALTUNG UND STEUERVERFAHREN DAFÜR SOWIE STEUERVORRICHTUNG FÜR DIE UMRICHTERSCHALTUNG
CIRCUIT INVERSEUR ET PROCÉDÉ DE COMMANDE ASSOCIÉ ET DISPOSITIF DE COMMANDE DE CIRCUIT INVERSEUR

(30) Priority: 19.01.2012 CN 201210017446
(43) Date of publication of application: 14.05.2014
(73) Proprietor: Huawei Technologies Co., Ltd., Longgang District Shenzhen, Guangdong 518129 (CN)
(72) Inventor: ZHANG, Yanzhong, Shenzhen Guangdong 518129 (CN); HUANG, Boning, Shenzhen Guangdong 518129 (CN)
(74) Representative: Isarpatent
(86) International application number: PCT/CN2012/083538
(87) International publication number: WO 2013/107198

(56) References cited:
- EP-A1- 2 053 730
- WO-A1-2010/049992
- CN-A- 101 917 133
- CN-A- 102 055 326
- CN-A- 102 074 968
- CN-A- 102 158 110
- US-A- 5 546 294
- US-A1- 2006 221 648
- SABATE J A ET AL: "ANALYSIS AND DESIGN-OPTIMIZATION OF LCC RESONANT INVERTER FOR HIGH-FREQUENCY AC DISTRIBUTED POWER SYSTEM", IEEE TRANSACTIONS ON INDUSTRIAL ELECTRONICS, IEEE SERVICE CENTER, PISCATAWAY, NJ, USA, vol. 42, no. 1, 1 February 1995 (1995-02-01), pages 63-70, XP000512141, ISSN: 0278-0046, DOI: 10.1109/41.345847
- WANG, YAOBEI ET AL.: 'Software design for sine-inverter control' INTERNATIONAL ELECTRONIC ELEMENTS December 2005, pages 37 - 40, XP008171628

## Description

### FIELD OF THE INVENTION

Embodiments of the present invention relate to the field of power technologies, and in particular, to an inverter circuit and a control method of the inverter circuit, and an inverter circuit control device.

### BACKGROUND OF THE INVENTION

An inverter circuit is a circuit for converting a direct current into an alternating current, is a circuit for converting direct current energy into alternating current energy. The inverter circuit includes a form of outputting an alternating voltage, for example, an uninterruptible power supply; and a form of outputting an alternating current along with an external alternating voltage, such as a solar grid-connected inverter and a grid-connected wind power generator.

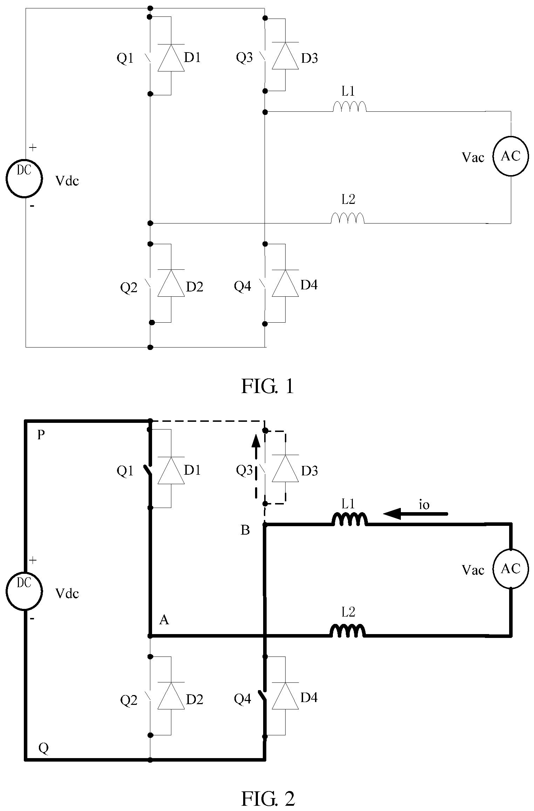

A conventional inverter circuit may be as shown in FIG. 1, which includes a direct current source DC, an alternating current source AC, four switch elements Q1, Q2, Q3, and Q4, and inductors L1 and L2. The switch elements Q1 and Q2 are connected in series to form a first bridge arm, the switch elements Q3 and Q4 are connected in series to form a second bridge arm, and the first bridge arm and the second bridge arm are connected in parallel to two ends of the direct current source DC. In addition, the filter inductor L1, the alternating current source AC and the filter inductor L2 in the foregoing are connected in series sequentially to form an alternating current source circuit, one end of the alternating current source circuit is connected between the switch element Q1 and the switch element Q2, and the other end of the alternating current source circuit is connected between the switch element Q3 and the switch element Q4 of the second bridge arm. In addition, diodes D1, D2, D3, and D4 that are connected in parallel to the switch elements respectively may be further disposed, and in each diode, a negative pole is closer to a positive end of the direct current source than a positive pole.

As shown in FIG. 2, a working principle of the inverter circuit is that: First turn on the switch elements Q1 and Q4, so that a current loop starts from the positive end of the direct current source, flows through Q1, L2, AC, L1, and Q4, and finally returns to a negative end of the direct current source, and at this time, a voltage output by the inverter circuit, that is, a voltage U_{ab} between two points A and B is a voltage U_{dc} of the direct current source. When the Q4 is turned off, because of an afterflow effect of the inductors L1 and L2, in the instant before the Q3 is turned on, the current loop is L2, AC, L1, D3, Q1, and L2; after the Q3 is turned on, the current loop is L2, AC, L1, Q3, Q1, and L2. At this time, the voltage U_{ab} output by the inverter circuit is 0. By enabling the U_{ab} voltage to perform high-frequency conversion between U_{dc} and 0, and by controlling durations of turning on and turning off the Q4, the U_{ab} voltage in a half cycle when the Q1 is turned on is equivalent to a sine positive half wave in terms of area, and a high-frequency voltage pulse of the U_{ab}, which undergoes filter functions of the L1 and L2, has the same phase as a sine positive half wave of the alternating current source, thereby realizing voltage following.

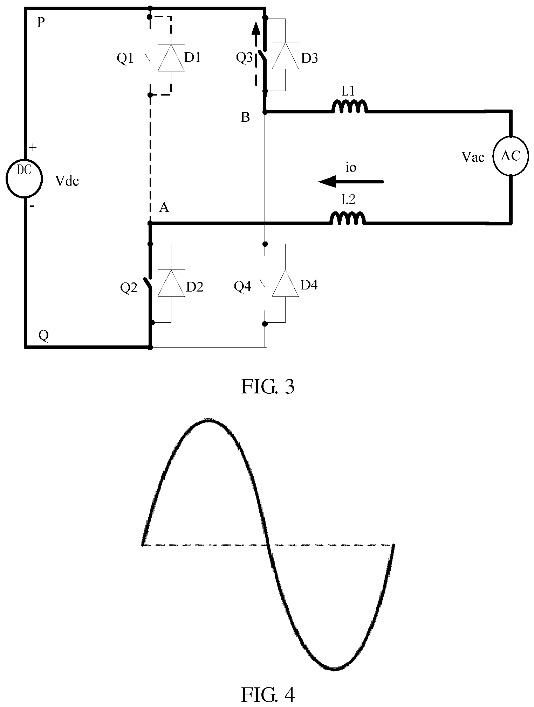

In one power frequency working cycle, the Q1 and the Q3 each are turned on for a half power frequency cycle, and a working situation of the half cycle in which the Q3 is turned on is similar to a working situation shown in FIG. 2, and specifically, reference may be made to FIG. 3. By controlling an output current of the direct current source, outputting of a current waveform shown in FIG. 4 may be implemented. As shown in FIG. 2 and FIG. 3, io indicates a flow direction of a current.

Switch loss refers to loss generated in a process that a switch switches between turning on and turning off, that is, in a process of turning on the switch, loss generated because of overlapping of dropping time of a voltage at two ends of the switch and rising time of a current that flows through the switch, that is, turn-on loss; or in a process of turning off the switch, loss generated because of overlapping of dropping time of a current that flows through the switch and rising time of a voltage at two ends of the switch, that is, turn-off loss. A switch that cannot avoid switch loss is referred to as a hard switch, and a switch that can avoid switch loss is referred to as a soft switch.

In the working principle as shown in FIG. 2, during turning off of the Q4, in a process that the current io that flows through the Q4 drops from a certain value to 0, a voltage rises from 0 to U_{dc}, and the two has time overlapped, thereby generating turn-off loss; during turning on of the Q4, in a process that a voltage at two ends of the Q4 drops from U_{dc} to 0, a current rises from 0 to io, and the two has time overlapped, thereby generating turn-on loss. Therefore, the Q4 is a hard switch. At the same time, the Q2 also generates turn-on loss and turn-off loss during processes of turning on and turning off.

In conclusion, the switch elements in the conventional inverter circuit are hard switches, so that in a process that a direct current is converted into an alternating current, excessively large power consumption is generated and energy conversion efficiency is low.

WO 2010/049992 A1 relates to a power inverse converter for converting DC power to AC power, in particular, to a power inverse conversion device having a function of amplifying the resonant current.

SABATE J A et al ("ANALYSIS AND DESIGN-OPTIMIZATION OF LCC RESONANT INVERTER FOR HIGH-FREQUENCY AC DISTRIBUTED POWER SYSTEM", IEEE TRANSACTIONS ON INDUSTRIAL ELECTRONICS, IEEE SERVICE CENTER, PISCATAWAY, NJ, USA, vol. 42, no. 1, 1 February 1995 pages 63-70, ISSN: 0278-0046, DOI: 10.1109/41.345847) relates to analysis and design of an LCC resonant inverter for a 20-kHz ac distributed power system.

US 2006/221648 A1 relates to a traditional DC-AC single-phase full-bridge inverter.

US 5546294 A relates generally to power converters and, more particularly, to a resonant converter with auxiliary circuitry for achieving high efficiency operation over a wide load range.

CN102074O68A refers to the field of ' circuit arrangements or systems for supplying or distributing electric power and systems for storing electric energy' . The invention belongs to the technical field of photovoltaic grid-connected power generation, in particular to a photovoltaic miniature grid-connected inverter control device and a control method thereof. In the miniature photovoltaic grid-connected inverter, a flyback inverter serves as a topological structure; aiming at the problems that the primary peak current is too large in the process of running at high power and the efficiency is too low in the process of running at low power in the traditional intermittent conduction mode, different control modes are adopted according to the power of the inverter; a critical conduction mode is adopted in the process of running at high power, namely current type grid connection can be realized, and the primary peak current can be reduced; an intermittent conduction mode is adopted in the process of running at medium power, and the primary peak current is not particularly high and the problem that switching frequency of a switching tube is increased with the reduction of power in the critical conduction mode is solved; and a burst mode is adopted at low power.

WANG,YAOBEI ET AL.: "Software design for sine-inverter control" International Electronic Elements, Dec. 2005, pages 37-40 refers to an inverter circuit includes a DC source U, a first bridge arm and a second bridge arm, wherein the first bridge arm is respectively connected to a positive pole and a negative pole of the DC source, and the second bridge arm is respectively connected to the DC link a positive electrode and a negative electrode of the source, the first bridge arm and the second bridge arm are disposed in parallel; The inverter circuit further includes a filter circuit, wherein the filter circuit includes a first inductor and a capacitor connected in series, Both ends of the capacitor are connected to a parallel branch, and the parallel branch includes an AC source or a load.

### SUMMARY OF THE INVENTION

Embodiments of the present invention provide an inverter circuit and a control method of the inverter circuit, and an inverter circuit control device, so as to solve defects of an inverter circuit in the prior art that in a process that a direct current is converted into an alternating current, excessively large power consumption is generated and energy conversion efficiency is low.

An embodiment of the present invention provides an inverter circuit, which includes a direct current source, a first bridge arm, and a second bridge arm, where the first bridge arm is connected to a positive pole and a negative pole of the direct current source, the second bridge arm is connected to the positive pole and the negative pole of the direct current source, and the first bridge arm and the second bridge arm are disposed in parallel;
the first bridge arm includes a first switch element set and a second switch element set that are connected in series, the first switch element set includes a first switch and a first diode that are connected in parallel, a negative pole of the first diode is connected to the positive pole of the direct current source, the second switch element set includes a second switch and a second diode that are connected in parallel, and a positive pole of the second diode is connected to the negative pole of the direct current source;
the second bridge arm includes a third switch element set and a fourth switch element set that are connected in series, the third switch element set includes a third switch and a third diode that are connected in parallel, a negative pole of the third diode is connected to the positive pole of the direct current source, the fourth switch element set includes a fourth switch and a fourth diode that are connected in parallel, and a positive pole of the fourth diode is connected to the negative pole of the direct current source; and
the inverter circuit further includes a filter circuit, where the filter circuit includes a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch includes an alternating current source or a load.

An embodiment of the present invention further provides a control method of the inverter circuit described in the foregoing, which includes:
during a first time period of one cycle of the inverter, completing multiple switch cycles, wherein during said each switch cycle the method comprising:
controlling the first switch in the first switch element set and the fourth switch in the fourth switch element set to be turned on, where a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch;
controlling the first switch to be turned off after a controlled turn-on time implementing control on the output current and the second diode in the second switch element set to be turned on, and then controlling the second switch in the second switch element set to be turned on, so that the second switch is turned on at a low voltage; and
when a value of a current of the first inductor is less than a preset current threshold, controlling the second switch in the second switch element set to be turned off and the first diode in the first switch element set to be turned on, and then controlling the first switch in the first switch element set to be turned on starting the next switch cycle, so that the second switch is turned off at a low current and the first switch is turned on at a low voltage.

For the inverter circuit described in the foregoing, an embodiment of the present invention further provides a control method of the inverter circuit, which includes:
during a first time period of one cycle of the inverter, completing multiple switch cycles, wherein during said each switch cycle the method comprising:
controlling the first switch in the first switch element set and the fourth switch in the fourth switch element set to be turned on, where a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch;
controlling the first switch and the fourth switch to be turned off after a controlled turn-on time implementing control on the output current and the second diode in the second switch element set and the third diode in the third switch element set to be turned on, and then controlling the second switch in the second switch element set and the third switch in the third switch element set to be turned on, so that the second switch and the third switch are turned on at a low voltage; and
when a value of a current of the first inductor is less than a preset current threshold, controlling the second switch in the second switch element set and the third switch in the third switch element set to be turned off and the first diode in the first switch element set and the fourth diode in the fourth switch element set to be turned on, and then controlling the first switch in the first switch element set and the fourth switch in the fourth switch element set to be turned on starting the next switch cycle, so that the second switch and the third switch are turned off at a low current, and the first switch and the fourth switch are turned on at a low voltage.

An embodiment of the present invention further provides an inverter circuit control device, which includes an inverter circuit and a control module; where
the inverter circuit includes a direct current source, a first bridge arm, and a second bridge arm, where the first bridge arm is connected to a positive pole and a negative pole of the direct current source, the second bridge arm is connected to the positive pole and the negative pole of the direct current source, and the first bridge arm and the second bridge arm are disposed in parallel; the first bridge arm includes a first switch element set and a second switch element set that are connected in series, the first switch element set includes a first switch and a first diode that are connected in parallel, a negative pole of the first diode is connected to the positive pole of the direct current source, the second switch element set includes a second switch and a second diode that are connected in parallel, a positive pole of the second diode is connected to the negative pole of the direct current source; the second bridge arm includes a third switch element set and a fourth switch element set that are connected in series, the third switch element set includes a third switch and a third diode that are connected in parallel, a negative pole of the third diode is connected to the positive pole of the direct current source, the fourth switch element set includes a fourth switch and a fourth diode that are connected in parallel, and a positive pole of the fourth diode is connected to the negative pole of the direct current source; and the inverter circuit further includes a filter circuit, where the filter circuit includes a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch includes an alternating current source or a load; during a first time period of one cycle of the inverter, completing multiple switch cycles, wherein during said each switch cycle,
the control module is configured to control the first switch in the first switch element set and the fourth switch in the fourth switch element set to be turned on, where a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch; and
the control module is further configured to control the first switch to be turned off after a controlled turn-on time implementing control on the output current and the second diode in the second switch element set to be turned on, and then control the second switch in the second switch element set to be turned on, so that the second switch is turned on at a low voltage; and
when a value of a current of the first inductor is less than a preset current threshold, the control module is further configured to control the second switch in the second switch element set to be turned off and the first diode in the first switch element set to be turned on, and then control the first switch in the first switch element set to be turned on starting the next switch cycle, so that the second switch is turned off at a low current and the first switch is turned on at a low voltage.

An embodiment of the present invention further provides an inverter circuit control device, which includes an inverter circuit and a control module; where
the inverter circuit includes a direct current source, a first bridge arm, and a second bridge arm, where the first bridge arm is connected to a positive pole and a negative pole of the direct current source, the second bridge arm is connected to the positive pole and the negative pole of the direct current source, and the first bridge arm and the second bridge arm are disposed in parallel; the first bridge arm includes a first switch element set and a second switch element set that are connected in series, the first switch element set includes a first switch and a first diode that are connected in parallel, a negative pole of the first diode is connected to the positive pole of the direct current source, the second switch element set includes a second switch and a second diode that are connected in parallel, and a positive pole of the second diode is connected to the negative pole of the direct current source; the second bridge arm includes a third switch element set and a fourth switch element set that are connected in series, the third switch element set includes a third switch and a third diode that are connected in parallel, a negative pole of the third diode is connected to the positive pole of the direct current source, the fourth switch element set includes a fourth switch and a fourth diode that are connected in parallel, and a positive pole of the fourth diode is connected to the negative pole of the direct current source; and the inverter circuit further includes a filter circuit, where the filter circuit includes a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch includes an alternating current source or a load; during a first time period of one cycle of the inverter, completing multiple switch cycles, wherein during said each switch cycle,
the control module is configured to control the first switch in the first switch element set and the fourth switch in the fourth switch element set to be turned on, where a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch; and
the control module is further configured to control the first switch and the fourth switch to be turned off after a controlled turn-on time implementing control on the output current and the second diode in the second switch element set and the third diode in the third switch element set to be turned on, and then control the second switch in the second switch element set and the third switch in the third switch element set to be turned on, so that the second switch and the third switch are turned on at a low voltage; and
when a value of a current of the first inductor is less than a preset current threshold, the control module is further configured to control the second switch in the second switch element set and the third switch in the third switch element set to be turned off and the first diode in the first switch element set and the fourth diode in the fourth switch element set to be turned on, and then control the first switch in the first switch element set and the fourth switch in the fourth switch element set to be turned on starting the next switch cycle, so that the second switch and the third switch are turned off at a low current, and the first switch and the fourth switch are turned on at a low voltage.

With the control method of the inverter circuit, and the inverter circuit control device according to the embodiments of the present invention, by adopting the foregoing technical solutions, when the first switch is controlled to be turned off or the first switch and the fourth switch are controlled to be turned off, correspondingly, the second diode in the second switch element set is turned on immediately or the second diode in the second switch element set and the third diode in the third switch element set are turned on immediately, and at this time, correspondingly, the second switch in the second switch element set is controlled to be turned on or the second switch in the second switch element set and the third switch in the third switch element set are controlled to be turned on, so that the second switch can be turned on at a low voltage or the second switch and the third switch can be turned on at a low voltage. Therefore, the second switch is a soft switch or the second switch and the third switch are soft switches, thereby reducing switch loss, and effectively improving the efficiency of the inverter circuit.

### BRIEF DESCRIPTION OF THE DRAWINGS

FIG. 1 is a schematic diagram of a conventional inverter circuit;
FIG. 2 is a working principle diagram of the inverter circuit shown in FIG. 1;
FIG. 3 is another working principle diagram of the inverter circuit shown in FIG. 1;
FIG. 4 is an oscillogram of an output current of the inverter circuit shown in FIG. 1;
FIG. 5 is a schematic diagram of an inverter circuit according to an embodiment of the present invention;
FIG. 6 is a flow chart of a control method of the inverter circuit shown in FIG. 5 according to an embodiment of the present invention;
FIG. 7 is a flow chart of another control method of the inverter circuit shown in FIG. 5 according to an embodiment of the present invention;
FIG. 8 is a flow chart of another control method of the inverter circuit shown in FIG. 5 according to an embodiment of the present invention;
FIG. 9 is a flow chart of another control method of the inverter circuit shown in FIG. 5 according to an embodiment of the present invention;
FIG. 10 is a schematic diagram of an inverter circuit according to another embodiment of the present invention;
FIG. 11 is an output oscillogram of one cycle of the inverter circuit shown in FIG. 10;
FIG. 12 is a principle diagram of the inverter circuit in a T1 time period shown in FIG. 11 under unipolar modulation;
FIG. 13A is a relationship diagram of an output current i and time t in a T4+T1 time period;
FIG. 13B is another relationship diagram of an output current i and time t in a T4+T1 time period;
FIG. 14 is a principle diagram of the inverter circuit in a T2 time period shown in FIG. 11 under unipolar modulation;
FIG. 15 is a principle diagram of the inverter circuit in a T3 time period shown in FIG. 11 under unipolar modulation;
FIG. 16 is a principle diagram of the inverter circuit in a T4 time period shown in FIG. 11 under unipolar modulation;
FIG. 17 is a principle diagram of the inverter circuit in a T1 time period shown in FIG. 11 under bipolar modulation;
FIG. 18 is a principle diagram of the inverter circuit in a T2 time period shown in FIG. 11 under bipolar modulation;
FIG. 19 is a principle diagram of the inverter circuit in a T3 time period shown in FIG. 11 under bipolar modulation;
FIG. 20 is a principle diagram of the inverter circuit in a T4 time period shown in FIG. 11 under bipolar modulation;
FIG. 21 is a schematic diagram of an inverter circuit according to another embodiment of the present invention;
FIG. 22 is a flow chart of a control method of the inverter circuit of the embodiment shown in FIG. 21 according to an embodiment of the present invention;
FIG. 23 is a flow chart of another control method of the inverter circuit shown in FIG. 21 according to an embodiment of the present invention;
FIG. 24A is another relationship diagram of an output current i and time t in a T4+T1 time period;
FIG. 24B is another relationship diagram of an output current i and time t in a T4+T1 time period;
FIG. 25 is a schematic structural diagram of an inverter circuit control device according to an embodiment of the present invention; and
FIG. 26 is a schematic structural diagram of an inverter circuit control device according to an embodiment of the present invention.

### DETAILED DESCRIPTION OF THE EMBODIMENTS

To make the objectives, technical solutions, and advantages of the embodiments of the present invention more comprehensible, the technical solutions in the embodiments of the present invention are described in the following clearly and completely with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

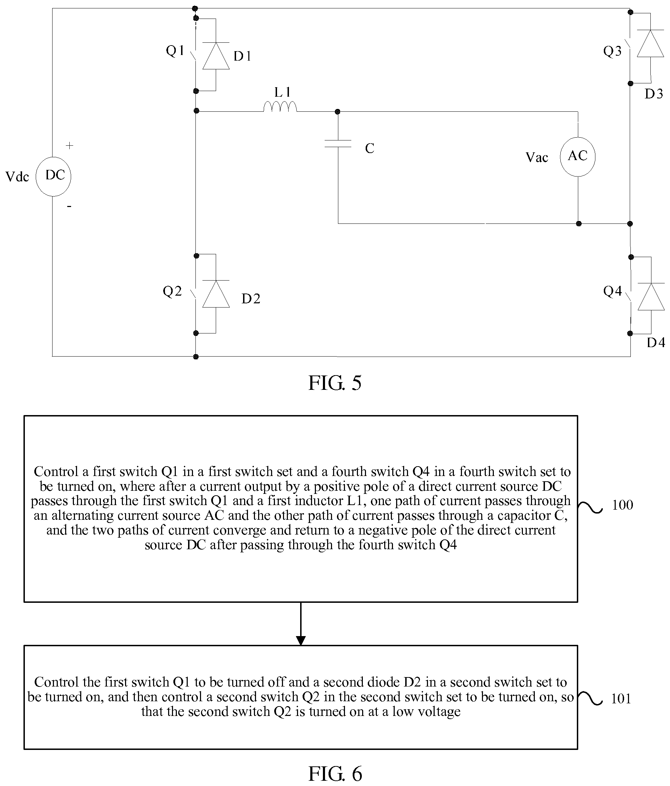

FIG. 5 is a schematic diagram of an inverter circuit according to an embodiment of the present invention. As shown in FIG. 5, the inverter circuit in this embodiment includes a direct current source DC, a first bridge arm, and a second bridge arm. The first bridge arm is connected to a positive pole and a negative pole of the direct current source DC, the second bridge arm is connected to the positive pole and the negative pole of the direct current source DC, and first bridge arm and the second bridge arm are disposed in parallel.

The first bridge arm includes a first switch element set and a second switch element set that are connected in series. As shown in FIG. 5, the first switch element set includes a first switch Q1 and a first diode D1 that are connected in parallel, a negative pole of the first diode D1 is connected to the positive pole of the direct current source DC, the second switch element set includes a second switch Q2 and a second diode D2 that are connected in parallel, and a positive pole of the second diode D2 is connected to the negative pole of the direct current source DC.

The second bridge arm includes a third switch element set and a fourth switch element set that are connected in series, the third switch element set includes a third switch Q3 and a third diode D3 that are connected in parallel, a negative pole of the third diode D3 is connected to the positive pole of the direct current source DC, the fourth switch element set includes a fourth switch Q4 and a fourth diode D4 that are connected in parallel, and a positive pole of the fourth diode D4 is connected to the negative pole of the direct current source DC.

The inverter circuit in this embodiment further includes a filter circuit, where the filter circuit includes a first inductor L1 and a capacitor C that are connected in series, that is, one end of the first inductor L1 is connected to the capacitor C, the other end of the first inductor L1 is connected to a circuit between the first switch element set and the second switch element set of the first bridge arm; and the other end of the capacitor C is connected to a circuit between the third switch element set and the fourth switch element set of the second bridge arm, tow ends of the capacitor C are connected in parallel to a parallel branch, and the parallel branch includes an alternating current source AC or a load. In FIG. 5, the technical solution of the present invention is described by using an example that an alternating current source AC is connected in parallel, and in a practical application, the alternating current source AC may also be a load.

FIG. 6 is a flow chart of a control method of the inverter circuit shown in FIG. 5 according to an embodiment of the present invention. As shown in FIG. 6, the control method of the inverter circuit in this embodiment may specifically include the following steps:
100. Control the first switch Q1 in the first switch element set and the fourth switch Q4 in the fourth switch element set to be turned on, where after a current output by the positive pole of the direct current source DC passes through the first switch Q1 and the first inductor L1, one path of current passes through the parallel branch and the other path of current passes through the capacitor C, and then the two paths of current converge and return to the negative pole of the direct current source DC after passing through the fourth switch Q4.

In this embodiment, it may be assumed that a flow direction of a current of the first inductor L1 is a positive direction.

101. Control the first switch Q1 to be turned off and the second diode D2 in the second switch element set to be turned on, and then control the second switch Q2 in the second switch element set to be turned on, so that the second switch Q2 is turned on at a low voltage.

In this embodiment, predetermined time may be any time period set according to an actual requirement.

According to a working principle of the first bridge arm, in the instant after the first switch Q1 is turned off and before the second switch Q2 is turned on, the second diode D2 in the second switch element set is turned on immediately to form a loop release current, and at this time, a voltage at two ends of the second diode D2 is a low voltage that is less than a cut-off voltage of the second diode D2, for example, may be 0 or a very small value that is close to 0, and at this time, the second switch Q2 in the second switch element set is turned on, so that the second switch Q2 is turned on at a low voltage. The low voltage may specifically be in a range that is less than 0.7 V. During the turning on at a low voltage in this embodiment, a corresponding low voltage value is less than a positive turn-on voltage drop of a corresponding diode, and may specifically be 0 or a very small value that is close to 0, for example, may be in a range that is less than 0.7 V, which is the same in subsequent embodiments and is not repeated herein.

The control method of the inverter circuit shown in FIG. 6 is an embodiment of performing control on the inverter circuit shown in FIG. 5 under unipolar modulation. Optionally, a time interval between step 100 and step 101 may be set according to a requirement. For example, in a process of repeatedly executing the foregoing steps 100 and 101, by controlling control time between steps 100 and 101, it may be implemented that an alternating current source outputs a sine wave or a cosine wave.

With the inverter circuit and the control method of the inverter circuit according to this embodiment, by adopting the foregoing technical solution, when the first switch Q1 is controlled to be turned off, correspondingly, the second diode D2 in the second switch element set is turned on immediately, and at this time, the second switch Q2 in the second switch element set is controlled to be turned on correspondingly, so that the second switch Q2 can be turned on at a low voltage. Therefore, the second switch Q2 is a soft switch, thereby reducing switch loss, and effectively improving the efficiency of the inverter circuit.

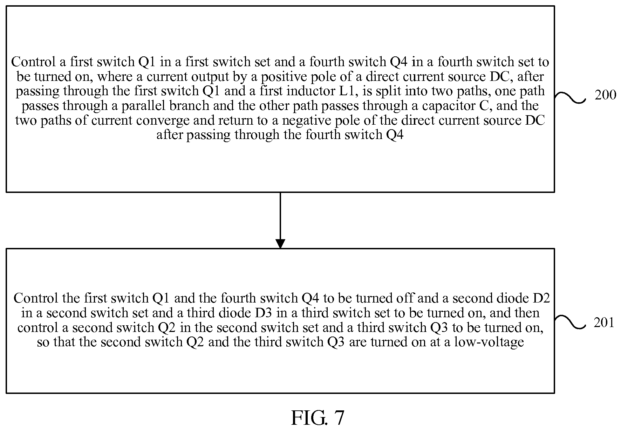

FIG. 7 is a flow chart of another control method of the inverter circuit shown in FIG. 5 according to an embodiment of the present invention. As shown in FIG. 7, the control method of the inverter circuit in this embodiment may specifically include the following steps:
200. Control the first switch Q1 in the first switch element set and the fourth switch Q4 in the fourth switch element set to be turned on, where a current output by the positive pole of the direct current source DC, after passing through the first switch Q1 and the first inductor L1, is split into two paths, one path passes through the parallel branch and the other path passes through the capacitor C, and then the two paths of current converge and return to the negative pole of the direct current source DC after passing through the fourth switch Q4.

Similarly, in this embodiment, it is assumed that a flow direction of a current of the first inductor L1 is a positive direction.

201. Control the first switch Q1 and the fourth switch Q4 to be turned off and the second diode D2 in the second switch element set and the third diode D3 in the third switch element set to be turned on, and then control the second switch Q2 in the second switch element set and the third switch Q3 to be turned on, so that the second switch Q2 and the third switch Q3 are turned on at a low-voltage.

According to working principles of the first bridge arm and the second bridge arm, in the instant after the first switch Q1 and the fourth switch Q4 are controlled to be turned off and before the second switch Q2 and the third switch Q3 are turned on, the second diode D2 in the second switch element set and the third diode D3 in the third switch element set are turned on immediately to form a loop release current, at this time, voltages in the second diode D2 and the third diode D3 are very small, for example, are 0 or close to 0, and at this time, the second switch Q2 in the second switch element set and the third switch Q3 are controlled to be turned on, so that the second switch Q2 and the third switch Q3 may be turned on at a low voltage.

The control method of the inverter circuit shown in FIG. 7 is an embodiment of performing control on the inverter circuit shown in FIG. 5 under bipolar modulation.

With the inverter circuit and the control method of the inverter circuit according to this embodiment, by adopting the foregoing technical solution, when the first switch Q1 and the fourth switch Q4 are controlled to be turned off, correspondingly, the second diode D2 in the second switch element set and the third diode D3 in the third switch element set are turned on immediately, at this time, the second switch Q2 in the second switch element set and the third switch Q3 in the third switch element set are controlled to be turned on correspondingly, so that the second switch Q2 and the third switch Q3 can be turned on at a low voltage. Therefore, the second switch Q2 and the third switch Q3 are soft switches, thereby reducing switch loss, and effectively improving the efficiency of the inverter circuit.

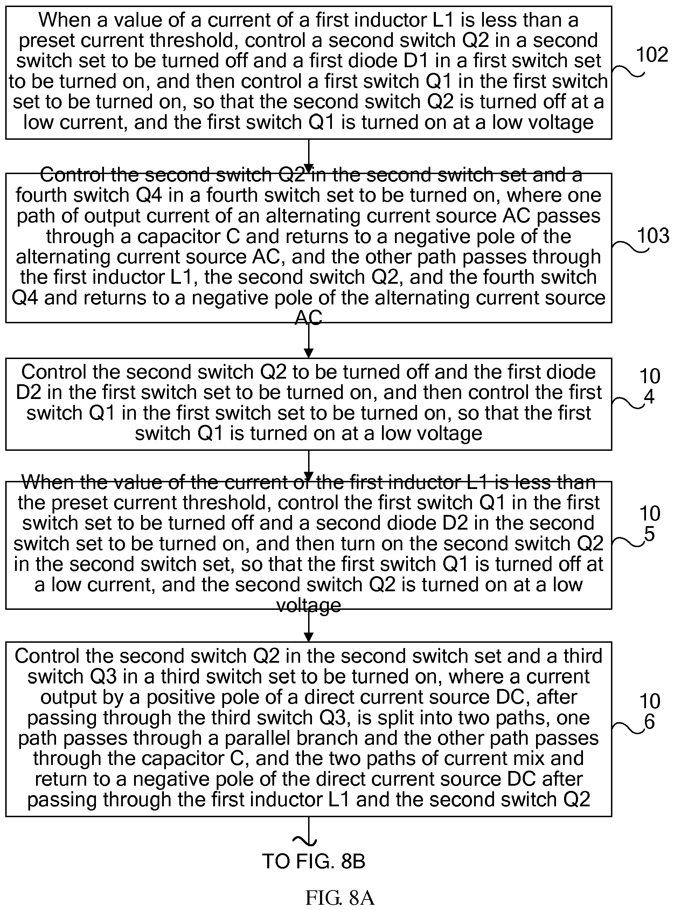

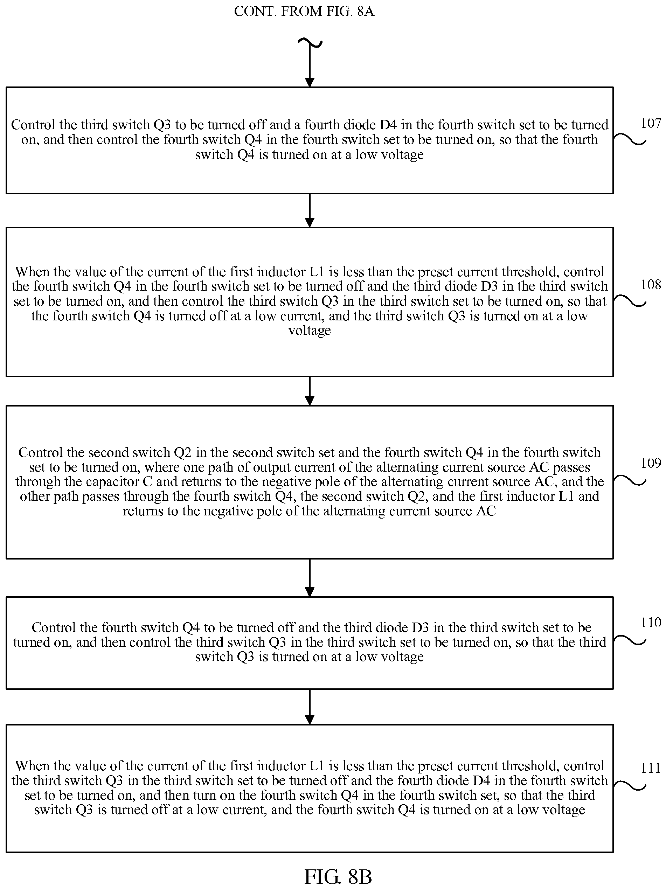

FIG. 8 is a flow chart of another control method of the inverter circuit shown in FIG. 5 according to an embodiment of the present invention. The control method of the inverter circuit in this embodiment, on the basis of the control method of the inverter circuit under unipolar modulation as shown in FIG. 6, may further include the following steps after 101.

102. When a value of a current of the first inductor L1 is less than a preset current threshold, control the second switch Q2 in the second switch element set to be turned off and the first diode D1 in the first switch element set to be turned on, and then control the first switch Q1 in the first switch element set to be turned on, so that the second switch Q2 is turned off at a low current, and the first switch Q1 is turned on at a low voltage.

The preset current threshold in this embodiment may be a current value that is less than 1 A. All preset current thresholds in the embodiments of the present invention are 1 A, and are not repeated subsequently. In the inverter circuit shown in FIG. 5, after the first switch Q1 in 101 is turned off, because the first inductor L1 and the capacitor C in the inverter circuit exist, a current in the inverter circuit may flow continuously, and during a period of time after the first switch Q1 is turned off, the first inductor L1 still has a current, but the current gradually decreases. When a value of the current of the first inductor L1 is less than the preset current threshold, for example, is zero or a very small value that is close to zero in a negative direction, the second switch Q2 in the second switch element set is controlled to be turned off, so that the second switch Q2 is turned off at a low current. After the second switch Q2 is turned off, the first diode D1 in the first switch element set is turned on immediately to form a loop release current, at this time, a voltage at two ends of the first diode D1 is small, for example, is 0 or a very small voltage value that is close to 0, and then the first switch Q1 in the first switch element set is controlled to be turned on, so that the first switch Q1 is turned on at a low voltage.

A control process of the foregoing steps 100 to 102 is a situation that the direct current source DC supplies power, and further, optionally, when the parallel branch connected in parallel to two ends of the capacitor C includes an alternating current source AC, optionally, after 102, the method may further include the following steps:
103. Control the second switch Q2 in the second switch element set and the fourth switch Q4 in the fourth switch element set to be turned on, where one path of output current of the alternating current source AC passes through the capacitor C and returns to a negative pole of the alternating current source AC, and the other path passes through the first inductor L1, the second switch Q2, and the fourth switch Q4 and returns to the negative pole of the alternating current source AC.

At this time, correspondingly, a flow direction of a current of the first inductor L1 is a negative direction.

104. Control the second switch Q2 to be turned off and the first diode D1 in the first switch element set to be turned on, and then control the first switch Q1 in the first switch element set to be turned on, so that the first switch Q1 is turned on at a low voltage.

According to the working principle of the first bridge arm, in the instant after the second switch Q2 is turned off and before the first switch Q1 is turned on, the first diode D1 in the first switch element set is turned on immediately to form a loop release current, at this time, a voltage at two ends of the first diode D1 is 0 or a very small value that is close to 0, and at this time, the first switch Q1 in the first switch element set is then turned on, so that the first switch Q1 may be turned on at a low voltage.

Further, optionally, after 104, the method may further include:
105. When the value of the current of the first inductor L1 is less than the preset current threshold, control the first switch Q1 in the first switch element set to be turned off and the second diode D2 in the second switch element set to be turned on, and then turn on the second switch Q2 in the second switch element set, so that the first switch Q1 is turned off at a low current, and the second switch Q2 is turned on at a low voltage.

In the inverter circuit shown in FIG. 5, after the first switch Q1 in 105 is turned off, because the first inductor L1 and the capacitor C in the inverter circuit exist, a current in the inverter circuit may flow continuously, and during a period of time after the first switch Q1 is turned off, the first inductor L1 still has a current, but the current gradually decreases. Due to the turning on of the first switch Q1, the current output by the positive pole of the direct current source DC passes through the first switch Q1 and flows towards a direction of the first inductor L1. When the value of the current of the first inductor L1 is less than the preset current threshold, for example, is zero or a very small value that is close to zero in a positive direction, the first switch Q1 in the first switch element set is controlled to be turned off, so that the first switch Q1 is turned off at a low current. After the first switch Q1 is turned off, the second diode D2 in the second switch element set is turned on immediately to form a loop release current, at this time, a voltage at two ends of the second diode D2 is small, for example, is 0 or a very small voltage value that is close to 0, and then the second switch Q2 in the second switch element set is controlled to be turned on, so that the second switch Q2 is turned on at a low voltage.

A control process of the foregoing steps 103 to 105 is a situation that the alternating current source AC supplies power, and further, optionally, when the parallel branch connected in parallel to two ends of the capacitor C includes the alternating current source AC, optionally, after 105, the method may further include the following steps:
106. Control the second switch Q2 in the second switch element set and the third switch Q3 in the third switch element set to be turned on, where a current output by the positive pole of the direct current source DC, after passing through the third switch Q3, is split into two paths, one path passes through the parallel branch and the other path passes through the capacitor C, and then the two paths of current mix and return to the negative pole of the direct current source DC after passing through the first inductor L1 and the second switch Q2.

At this time, a flow direction of a current that corresponds to the first inductor L1 in step 106 is a negative direction.

107. Control the third switch Q3 to be turned off and the fourth diode D4 in the fourth switch element set to be turned on, and then control the fourth switch Q4 in the fourth switch element set to be turned on, so that the fourth switch Q4 is turned on at a low voltage.

According to the working principle of the second bridge arm, in the instant after the third switch Q3 is turned off and before the fourth switch Q4 is turned on, the fourth diode D4 in the fourth switch element set is turned on immediately, at this time, a corresponding voltage at two ends of the fourth diode D4 is small, for example, is 0 or a very small value that is close to 0, and at this time, the fourth switch Q4 in the fourth switch element set is then controlled to be turned on, so that the fourth switch Q4 may be turned on at a low voltage.

Further, after the foregoing step 107, the method may further include the following steps:
108. When the value of the current of the first inductor L1 is less than the preset current threshold, control the fourth switch Q4 in the fourth switch element set to be turned off and the third diode D3 in the third switch element set to be turned on, and then control the third switch Q3 in the third switch element set to be turned on, so that the fourth switch Q4 is turned off at a low current, and the third switch Q3 is turned on at a low voltage.

In the inverter circuit shown in FIG. 5, after the third switch Q3 in 107 is turned off, because the first inductor L1 and the capacitor C in the inverter circuit exist, a current in the inverter circuit may flow continuously, and during a period of time after the third switch Q3 is turned off, the first inductor L1 still has a current (at this time, the current is in a negative direction), but the current gradually decreases (in other words, a current in a positive direction increases gradually). When the current of the first inductor L1 increases from a negative value to zero or starts to become a very small positive value that is close to zero, the fourth switch Q4 in the fourth switch element set is controlled to be turned off, so that the fourth switch Q4 is turned off at a low current. After the fourth switch Q4 is turned off, the third diode D3 in the third switch element set is turned on immediately to form a loop release current, at this time, a voltage at two ends of the third diode D3 is small, for example, is 0 or a very small value that is close to 0, and then the third switch Q3 in the third switch element set is controlled to be turned on, so that the third switch Q3 is turned on at a low voltage.

A control process of the foregoing steps 107 to 108 is a situation that a direct current source circuit supplies power, and further, optionally, when the parallel branch connected in parallel to two ends of the capacitor C includes the alternating current source AC, optionally, after 108, the method may further include the following steps: 109. Control the second switch Q2 in the second switch element set and the fourth switch Q4 in the fourth switch element set to be turned on, where one path of output current of the alternating current source AC passes through the capacitor C and returns to the negative pole of the alternating current source AC, and the other path passes through the fourth switch Q4, the second switch Q2, and the first inductor L1 and returns to the negative pole of the alternating current source AC.

At this time, a current direction corresponding to the first inductor L1 is a positive direction.

110. Control the fourth switch Q4 to be turned off and the third diode D3 in the third switch element set to be turned on, and then control the third switch Q3 in the third switch element set to be turned on, so that the third switch Q3 is turned on at a low voltage.

According to the working principles of the first bridge arm and the second bridge arm, in the instant after the fourth switch Q4 is turned off and before the third switch Q3 is turned on, the third diode D3 in the third switch element set is turned on immediately to form a loop release current, at this time, a voltage at two ends of the third diode D3 is 0 or a very small value that is close to 0, and at this time, the third switch Q3 in the third switch element set is then turned on, so that the third switch Q3 may be turned on at a low voltage.

Further, after the foregoing step 110, the method may further include the following step:
111. When the value of the current of the first inductor L1 is less than the preset current threshold, control the third switch Q3 in the third switch element set to be turned off and the fourth diode D4 in the fourth switch element set to be turned on, and then turn on the fourth switch Q4 in the fourth switch element set, so that the third switch Q3 is turned off at a low current, and the fourth switch Q4 is turned on at a low voltage.

In the inverter circuit shown in FIG. 5, after the fourth switch Q4 in 110 is turned off, because the first inductor L1 and the capacitor C in the inverter circuit exist, a current in the inverter circuit may flow continuously, and during a period of time after the fourth switch Q4 is turned off, the first inductor L1 still has a current, but the current gradually decreases. Due to the turning on of the third switch Q3, the current output by the positive pole of the direct current source DC passes through the third switch Q3 and flows towards a direction of the first inductor L1. When the value of the current of the first inductor L1 is less than the preset current threshold, for example, is zero or a very small value that is close to zero in a negative direction, the third switch Q3 in the third switch element set is controlled to be turned off, so that the third switch Q3 is turned off at a low current. After the third switch Q3 is turned off, the fourth diode D4 in the fourth switch element set is turned on immediately to form a loop release current, at this time, a voltage at two ends of the fourth diode D4 is small, for example, is 0 or a very small voltage value that is close to 0, and then the fourth switch Q4 in the fourth switch element set is controlled to be turned on, so that the fourth switch Q4 is turned on at a low voltage.

The solution in this embodiment may be divided into four parts: steps 103 to 105, 106 to 108, 109 to 111, and the foregoing steps 100 to 102, which may be parallel technical solutions, and a sequence among steps 100 to 102, steps 103 to 105, steps 106 to 108, and steps 109 to 111 may be set according to an actual requirement. In each part among steps 100 to 102, steps 103 to 105, steps 106 to 108, and steps 109 to 111, a step sequence is determinate.

Preset time in this embodiment is set according to an actual requirement, where the preset current threshold is a very small value that is close to zero, or is zero.

With the inverter circuit in this embodiment, by adopting the foregoing technical solution, low-voltage turn-on and low-current turn-off of the first switch Q1, the second switch Q2, the third switch Q3, and the fourth switch Q4 can be implemented, so that the first switch Q1, the second switch Q2, the third switch Q3, and the fourth switch Q4 are soft switches, thereby reducing loss of the first switch Q1, the second switch Q2, the third switch Q3, and the fourth switch Q4, and effectively improving the efficiency of the inverter circuit.

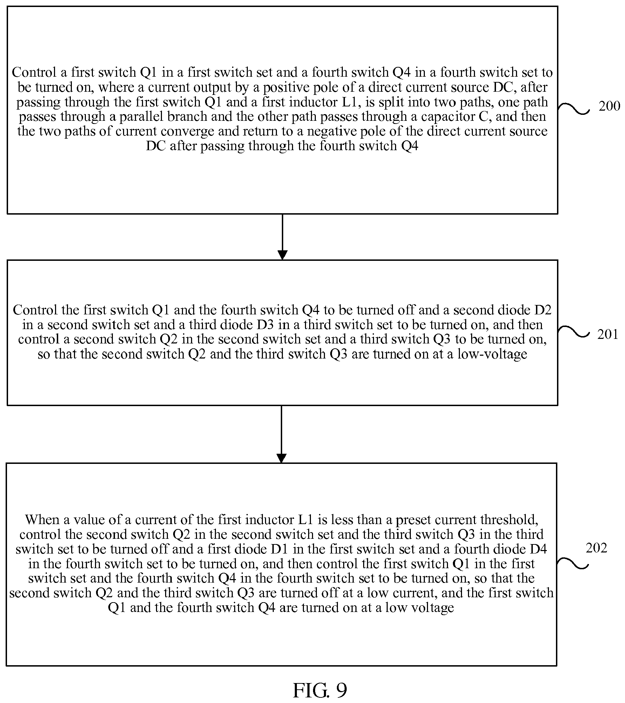

FIG. 9 is a flow chart of another control method of the inverter circuit shown in FIG. 5 according to an embodiment of the present invention. The control method of the inverter circuit in this embodiment, on the basis of the control method of the inverter circuit under bipolar modulation shown in FIG. 7, may further include the following steps after 201:
202. When a value of a current of the first inductor L1 is less than a preset current threshold, control the second switch Q2 in the second switch element set and the third switch Q3 in the third switch element set to be turned off and the first diode D1 in the first switch element set and the fourth diode D4 in the fourth switch element set to be turned on, and then control the first switch Q1 in the first switch element set and the fourth switch Q4 in the fourth switch element set to be turned on, so that the second switch Q2 and the third switch Q3 are turned off at a low current, and the first switch Q1 and the fourth switch Q4 are turned on at a low voltage.

Similarly, the preset current threshold in this embodiment may be a current value that is less than 1 A. In step 200, after the first switch Q1 in the first switch element set and the fourth switch Q4 in the fourth switch element set are controlled to be turned on, a flow direction of the first inductor L1 is a positive direction. After the first switch Q1 and the fourth switch Q4 are turned off in 201, because the first inductor L1 and the capacitor C in the circuit exist, an inductive current in the first inductor L1 flows continuously. After the second switch Q2 in the second switch element set and the third switch Q3 in the third switch element set are controlled to be turned on, a flow direction of a current of the first inductor L1 should be a negative direction. However, the current in the first inductor L1 is the inductive current, and flows in a negative direction until the inductive current decreases to zero. When the current in the first inductor L1 is zero or starts to become a very small value that is close to zero in a negative direction, the second switch Q2 in the second switch element set and the third switch Q3 in the third switch element set are controlled to be turned off, so that the second switch Q2 and the third switch Q3 are turned off at a low current.

According to working principles of the first bridge arm and the second bridge arm, when the current of the first inductor L1 is zero or a very small value that is close to zero in a negative direction, in the instant after the second switch Q2 and the third switch Q3 are controlled to be turned off and before the first switch Q1 and the fourth switch Q4 are turned on, the first diode D1 in the first switch element set and the fourth diode D4 in the fourth switch element set are turned on immediately to form a loop, at this time, voltages at two ends of the first diode D1 and the fourth diode D4 are very small, which are zero or a very small value that is close to zero, and then the first switch Q1 in the first switch element set and the fourth switch Q4 in the fourth switch element set are controlled to be turned on, so that the first switch Q1 and the fourth switch Q4 are turned on at a low voltage.

Similarly, the preset time in this embodiment is set according to an actual requirement, where the preset current threshold is a very small value that is close to zero, or zero. For example, a current value that is less than 1 A may be used.

With the inverter circuit and the control method of the inverter circuit, by adopting the foregoing technical solution, low-voltage turn-on and low-current turn-off of the second switch Q2 and the third switch Q3, and low-voltage turn-on of the first switch Q1 and the fourth switch Q4 can be implemented, so that the first switch Q1, the second switch Q2, the third switch Q3, and the fourth switch Q4 are soft switches, thereby reducing switch loss, and effectively improving the efficiency of the inverter circuit.

Through steps 100 to 111 of the control method under unipolar modulation and control steps 200 to 202 under bipolar modulation in the foregoing embodiments, active output and reactive output of an alternating current source AC may be implemented separately. Specifically, the active output and reactive output may be implemented respectively by combining steps 100 to 111 or steps 200 to 202 in the foregoing embodiments and an active output principle or a reactive output principle in the prior art, which is not repeated herein.

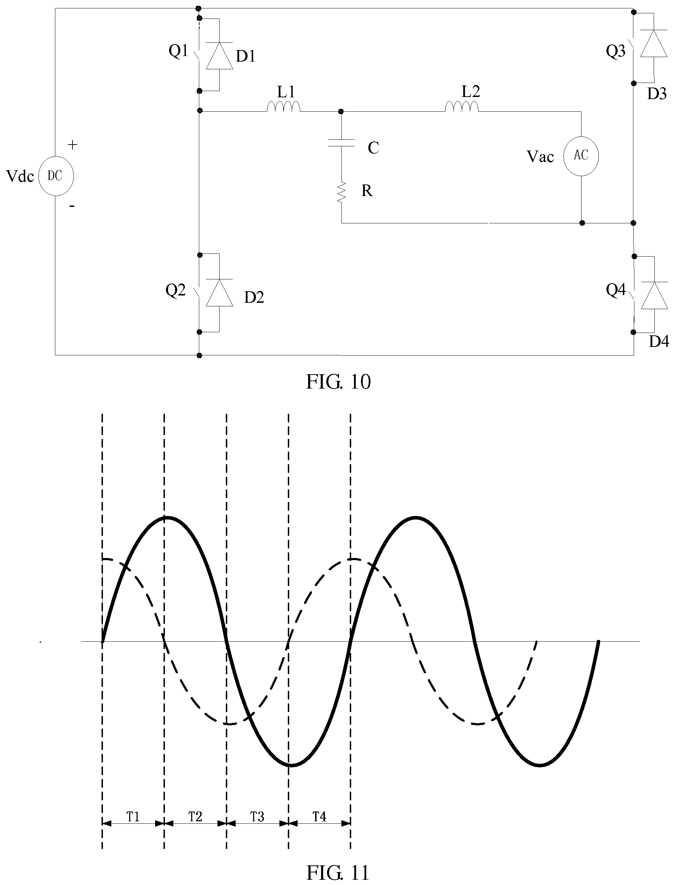

FIG. 10 is a schematic diagram of an inverter circuit according to another embodiment of the present invention. The inverter circuit shown in FIG. 10, on the basis of the embodiment shown in FIG. 5, may further include the following solution:
As shown in FIG. 10, a parallel branch connected in parallel to two ends of a capacitor C in the inverter circuit in this embodiment further includes a second inductor L2, the second inductor L2 is connected in series to an alternating current source AC or a load, that is, one end of the second inductor L2 is connected to the alternating current source AC or the load, and the other end of the second inductor L2 is connected to a circuit between a first inductor L1 and the capacitor C. The second inductor L2 added in this embodiment mainly functions as a filter, and is configured to smooth an output current.

Further, optionally, in the inverter circuit in this embodiment, a filter circuit may further include a resistor R connected in series to the capacitor C, that is, one end of the resistor R is connected to the capacitor C, and the other end of the resistor R is connected to a circuit between a third switch element set and a fourth switch element set of a second bridge arm, and at this time, correspondingly, the parallel branch is connected in parallel to two ends of the capacitor C and the resistor R connected in series. In this embodiment, the resistor R is connected in series to the capacitor C, which may prevent resonance of the first inductor L1, the second inductor L2, and the capacitor C.

In the embodiment shown in FIG. 10, on the basis of the embodiment shown in FIG. 5, adding the second inductor L2 in the parallel branch and adding the resistor R in the filter circuit is taken as an example, and in an actual application, on the basis of the embodiment shown in FIG. 5, the second inductor L2 and the resistor R are added alternatively to form an optional embodiment of the inverter circuit in the present invention. Similarly, in FIG. 10, the technical solution of the present invention is also described by using an example that the parallel branch includes an alternating current source AC.

Similarly, the control method of the inverter circuit shown in FIG. 6 to FIG. 9 may be used to perform control on the inverter circuit shown in FIG. 10, and specifically, reference may be made to the description of the embodiments shown in FIG. 6 to FIG. 9, where FIG. 6 and FIG. 8 show the control method under unipolar modulation, and FIG. 7 and FIG. 9 show the control method under bipolar modulation.

With the inverter circuit in this embodiment, by adopting the foregoing technical solution, low-voltage turn-on and/or low-current turn-off of a switch can be implemented, so that the switch is a soft switch, thereby reducing loss, and effectively improving the efficiency of the inverter circuit.

By taking the inverter circuit shown in FIG. 10 as an example, a working principle of the inverter circuit in this embodiment of the present invention is described in detail in the following.

FIG. 11 is an output oscillogram of one cycle of the inverter circuit shown in FIG. 10. As shown in FIG. 11, T1, T2, T3, and T4 each are a cycle/4, where a solid line indicates an output voltage, and a dotted line indicates an output current.

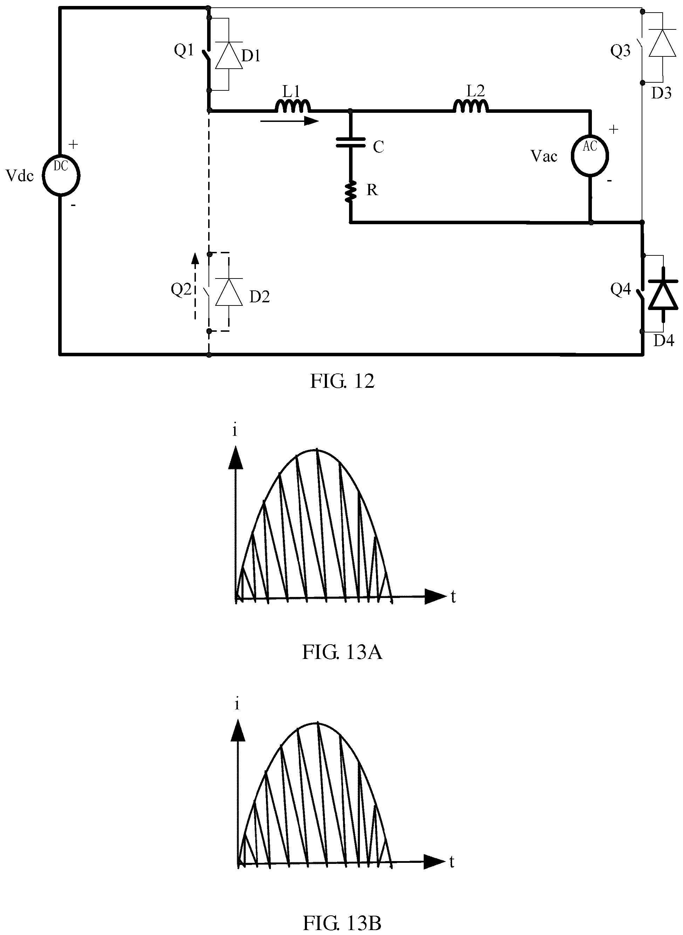

FIG. 12 is a principle diagram of the inverter circuit in a T1 time period shown in FIG. 11 under unipolar modulation. As shown in FIG. 12, thick lines indicate a circuit state diagram in the T1 time period.

As shown in FIG. 12, in the T1 time period, a first switch Q1 in a first switch element set is a master switch, and for a voltage of an alternating current source AC, an upper direction is a positive pole and a lower direction is a negative pole. First, the first switch Q1 in the first switch element set and a fourth switch Q4 in a fourth switch element set are turned on, and through a high-frequency switch, a current output by a positive pole of a direct current source DC, after passing through the first switch Q1 and the first inductor L1, is split into two paths, one path passes through the capacitor C, the resistor R, and the fourth switch Q4 and returns to a negative pole of the direct current source, and the other path passes through the second inductor L2, the alternating current source AC, and the fourth switch Q4 and returns to the negative pole of the direct current source. At this time, a current direction of the first inductor L1 is a positive direction.

According to a working principle of a first bridge arm, after the first switch Q1 is turned off, a second switch Q2 should be turned on. In the instant after the first switch Q1 is turned off and before the second switch Q2 is turned on, a second diode D2 is turned on first, at this time, a voltage at two ends of the second diode is very small, which is zero or a very small value that is close to zero, and at this time, the second switch Q2 is turned on, so that the second switch Q2 may be turned on at a low voltage. After the second switch Q2 is turned on, because the first inductor L1, the second inductor L2, and the capacitor C exist, a current in the first inductor L1 flows continuously, that is, the current direction should keep unchanged; but the current of the first inductor L1 decreases gradually until the current of the first inductor L1 decreases to zero or a very small value that is close to zero in a negative direction, and the second switch Q2 is turned off, so that the second switch Q2 is turned off at a low current, and at this time, correspondingly, turn-on of the first switch Q1 is also low-voltage turn-on. After the first switch Q1 is turned on, a state returns to a state shown in FIG. 12, and at this time, one switch cycle in the T1 time period under unipolar modulation is completed. In the T1 time period, a waveform in the T1 time period in FIG. 11 may be output by completing hundreds of the foregoing switch cycles.

In the T1 time period, a phase of an output voltage is the same as that of an output current, and a working principle of an inverter in this state is pure active output.

FIG. 13A is a relationship diagram of an output current i and time t in a T4+T1 time period. FIG. 13B is another relationship diagram of an output current i and time t in a T4+T1 time period. Herein, T4 time period + T1 time period may be formed by a last T/4 of a previous cycle and a first T/4 of a subsequent cycle in two adjacent cycles. As shown in FIG. 13A and FIG. 13B, an arc of an upper half axis indicates a current i output in a T4+T1 cycle, a jagged line indicates a current of the first inductor L1, for example, the current of the first inductor L1 may be controlled by controlling turn-on time of the first switch Q1 and the fourth switch Q4, thereby implementing control on the output current. The current of the first inductor L1 may be detected by disposing a detector in front of or behind the first inductor L1 in a conventional manner. FIG. 13A is a corresponding schematic diagram of performing control when a tiny negative value occurs after the current of the first inductor L1 decreases to zero, and FIG. 13B is a corresponding schematic diagram of performing control when the current of the first inductor L1 decreases to zero. A direction of a relationship diagram of an output current i and time t in a T2+T3 time period (below a horizontal axis) is opposite to that of the relationship diagrams of an output current i and time t shown in FIG. 13A and FIG. 13B (above the horizontal axis), that is to say, it may be achieved by turning patterns shown in FIG. 13A and FIG. 13B to below the horizontal axis, which is not repeated herein.

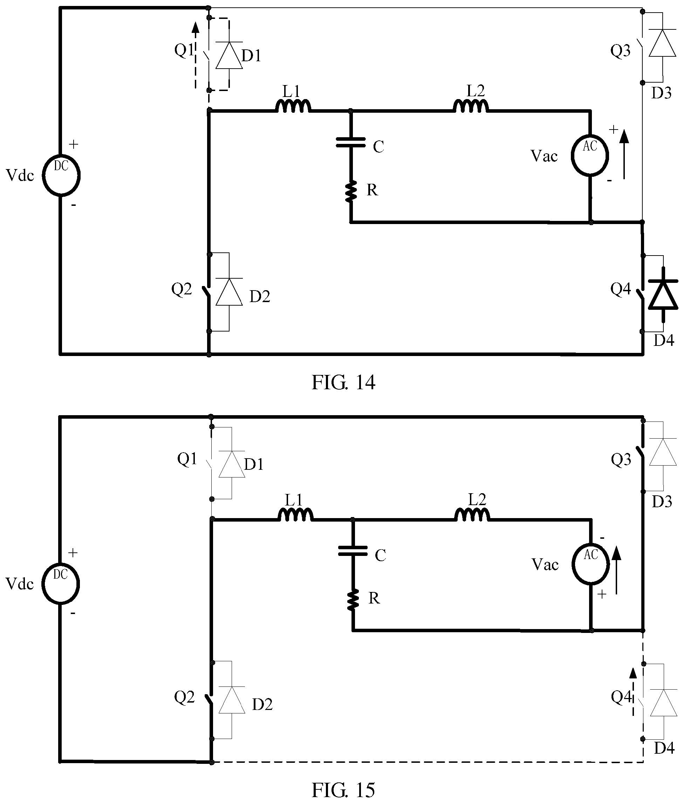

FIG. 14 is a principle diagram of the inverter circuit in a T2 time period shown in FIG. 11 under unipolar modulation. As shown in FIG. 14, thick lines indicate a circuit state diagram in the T2 time period. As shown in FIG. 14, in the T2 time period, a second switch Q2 is a master switch, and for a voltage of an alternating current source AC, an upper direction is a positive pole and a lower direction is a negative pole. A current direction of the first inductor L1 is opposite to the current direction of the first inductor L1 in the T1 time period, and if a direction of the first inductor L1 in the T1 time period is positive, a direction of the first inductor L1 in the T2 time period is negative. Therefore, when the T1 time period switches to the T2 time period, it is required to control the current of the first inductor L1 to be 0. When the T2 time period starts, the second switch Q2 and a fourth switch Q4 are turned on, and at this time, the alternating current source AC supplies power, a current output by the positive pole of the alternating current source AC, after passing through the second inductor L2, is split into two paths, one path passes through the first inductor L1, the second switch Q2, and the fourth switch Q4 and returns to the negative pole of the alternating current source AC, and the other path passes through the capacitor C and the resistor R and returns to the negative pole of the alternating current source AC. When a current of the first inductor L1 in a negative direction increases to a certain value, the second switch Q2 is turned off, and according to a working principle of a first bridge arm, it is required to turn on a first switch Q1. After the second switch Q2 is turned off and before the first switch Q1 is turned on, a current, after passing through a first diode D1, flows to a positive pole of a direct current source DC, and at this time, a voltage at two ends of the first diode D1 is very small, which is zero or a very small value that is close to zero, and the first switch Q1 is turned on, so that the first switch Q1 is turned on at a low voltage.

Because the first inductor L1, the second inductor L2, and the capacitor C exist, after the second switch Q2 is turned off, an inductive current in the first inductor L1 flows continuously along a negative direction. After the first switch Q1 is turned on, the direct current source DC outputs a current, and the current, after passing through the first switch Q1, flows to the first inductor L1, and a corresponding current flow direction of the first inductor L1 is opposite to a flow direction of the inductive current that continuously flows in the first inductor L1, and therefore, a current of the first inductor L1 gradually increases from a negative value to zero and then flows in a positive direction. When the current of the first inductor L1 gradually increases from a negative value to zero or starts to become a very small value that is close to zero in a positive direction, the first switch Q1 is then turned off, so that the first switch Q1 is turned off at a low current, and at this time, correspondingly, turn-on of the second switch Q2 is also low-voltage turn-on. After the second switch Q2 is turned on, a state returns to a state shown in FIG. 14, and at this time, one switch cycle in the T2 time period under unipolar modulation is completed, and in the T2 time period, a waveform in the T2 time period in FIG. 11 may be output by completing hundreds of the foregoing switch cycles.

In the time period T2 shown in FIG. 14, a phase of an output voltage is opposite to that of an output current, and the mains electricity pours reactive power into the inverter.

FIG. 15 is a principle diagram of the inverter circuit in a T3 time period shown in FIG. 11 under unipolar modulation. As shown in FIG. 15, thick lines indicate a circuit state diagram in the T3 time period.

As shown in FIG. 15, in the T3 time period, a third switch Q3 is a master switch, and for a voltage of an alternating current source AC, an upper direction is a positive pole and a lower direction is a negative pole. A second switch Q2 in a second switch element set and the third switch Q3 in a third switch element set are turned on, and a current output by a direct current source DC, after passing through the third switch Q3, is split into two paths, one path passes through the alternating current source AC and the second inductor L2, and the other path passes through the resistor R and the capacitor C, the two paths converge at one end of the first inductor L1, where the one end of the first inductor L1 is near the second inductor L2 and the capacitor C, and the current after convergence returns to a negative pole of the direct current source after passing through the first inductor L1 and the second switch Q2. A current direction of the first inductor L1 shown in FIG. 15 is opposite to the current direction of the first inductor L1 shown in FIG. 12, that is to say, a direction of the first inductor L1 in the T3 time period is a negative direction. When a current of the first inductor L1 in a negative direction increases to a certain value, the third switch Q3 is turned off, and according to a working principle of a second bridge arm, after the third switch Q3 is turned off, a fourth diode D4 is turned on immediately, and in the instant of turning on the fourth diode D4, a voltage at two ends of the fourth diode D4 is very small, which is zero or a very small value that is close to zero. At this time, a fourth switch Q4 is turned on, so that the fourth switch Q4 is turned on at a low voltage.

After the fourth switch Q4 is turned on, because the first inductor L1, the second inductor L2, and the capacitor C exist, a current in the first inductor L1 flows continuously, decreases gradually, and decreases to zero or starts to become a very small value that is close to zero in a positive direction. At this time, the fourth switch Q4 is turned off, so that the fourth switch Q4 is turned off at a low current, and at the same time, the third switch Q3 is turned on, and correspondingly, the third switch Q3 is turned on at a low current. At this time, a state returns to a state shown in FIG. 15, and at this time, one switch cycle in the T3 time period under unipolar modulation is completed, and in the T3 time period, a waveform in the T3 time period in FIG. 11 may be output by completing hundreds of the foregoing switch cycles.

In the time period T3 shown in FIG. 15, a phase of an output voltage is the same as that of an output current, and a working principle of an inverter in this state is pure active output.

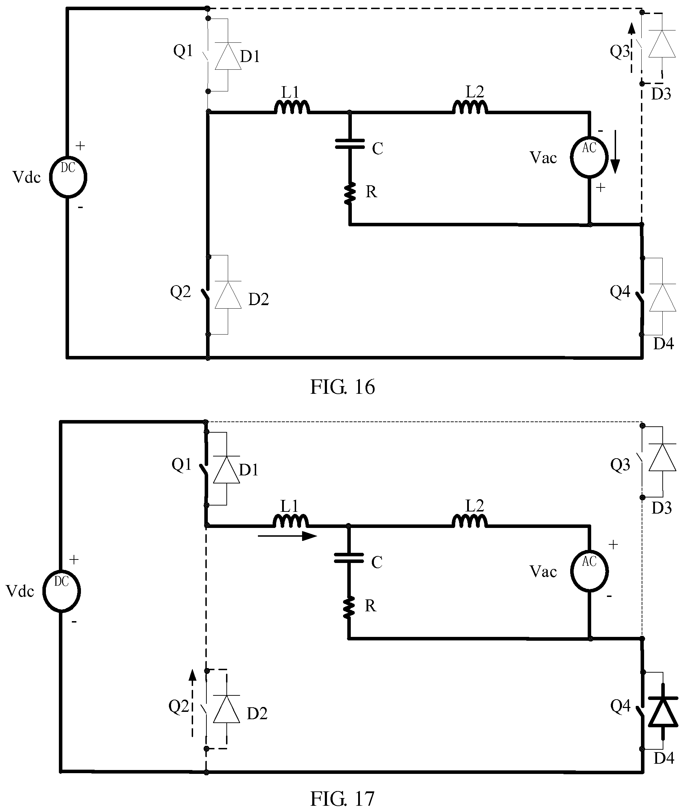

FIG. 16 is a principle diagram of the inverter circuit in a T4 time period shown in FIG. 11 under unipolar modulation. As shown in FIG. 16, thick lines indicate a circuit state diagram in the T4 time period.

As shown in FIG. 16, in the T4 time period, a fourth switch Q4 is a master switch, and for a voltage of an alternating current source AC, an upper direction is a positive pole and a lower direction is a negative pole. A current direction of the first inductor L1 is the same as the current direction of the first inductor L1 in the T1 time period, and is opposite to the current direction in the T3 time period, and when the T3 time period switches to the T4 time period, it is required to control the current of the first inductor L1 to be 0. When the T4 time period starts, a second switch Q2 and the fourth switch Q4 are turned on, and at this time, the alternating current source AC supplies power, but in the T4 time period, the positive and negative poles of the alternating current source AC are opposite to the positive and negative poles of the alternating current source AC in the T2 time period shown in FIG. 14. A current output by the positive pole of the alternating current source AC, after passing through the fourth switch Q4, the second switch Q2, and the first inductor L1, is split into two paths, one path passes through the second inductor L2 and returns to the negative pole of the alternating current source AC, and the other path passes through the capacitor C and the resistor R and returns to the negative pole of the alternating current source AC. When a current of the first inductor L1 in a positive direction increases to a certain value, the fourth switch Q4 is turned off, and according to a working principle of a second bridge arm, it is required to turn on a third switch Q3. After the fourth switch Q4 is turned off and before the third switch Q3 is turned on, a current, after passing through a third diode D3, flows to a positive pole of a direct current source DC, at this time, a voltage at two ends of the third diode D3 is very small, which is zero or a very small value that is close to zero, and the third switch Q3 is turned on, so that the third switch Q3 is turned on at a low voltage.

After the third switch Q3 is turned on, the direct current source DC outputs a current, the current, after passing through the third switch Q3, is split into two paths, one path passes through the alternating current source AC and the second inductor L2, the other path passes through the resistor R and the capacitor C, and then the two paths of current converge at one end of the first inductor L1, where the one end of the first inductor L1 is near the second inductor L2 and the capacitor C, and return to a negative pole of the direct current source DC after passing through the first inductor L1 and the second switch Q2. At this time, after the third switch Q3 is turned on, a current direction of the first inductor L1 is opposite to a direction of an inductive current that is generated in the first inductor L1 after the fourth switch Q4 is turned off, so that the current in the first inductor L1 gradually decreases from a positive value to zero and then to a negative flow direction. When the current in the first inductor L1 decreases to zero or starts to become a very small value that is close to zero in a negative direction, the third switch Q3 is turned off, so that the third switch Q3 is turned off at a low current, and at this time, a corresponding current is zero or a very small value that is close to zero, and turn-on of the fourth switch Q4 also belongs to low-voltage turn-on. After the fourth switch Q4 is turned on, a state returns to a state shown in FIG. 16, and at this time, one switch cycle in the T4 time period under unipolar modulation is completed, and in the T4 time period, a waveform in the T4 time period in FIG. 11 may be output by completing hundreds of the foregoing switch cycles.

In the time period T4 shown in FIG. 16, a phase of an output voltage is opposite to that of an output current, and the mains electricity pours reactive power into the inverter.

Through the control in the T1, T2, T3, and T4 time periods, one complete cycle output by the inverter is completed. In each time period among the T1, T2, T3, and T4 time periods, hundreds of the foregoing corresponding switch cycles may be adopted to implement the output voltage and current shown in FIG. 11. FIG. 12, FIG. 14, FIG. 15, and FIG. 16 in the foregoing are master state diagrams in the T1, T2, T3, and T4 time periods respectively. In the case that the alternating current source AC in the parallel branch in FIG. 12, FIG. 14, FIG. 15 and FIG. 16 in the foregoing does not supply power, it may be replaced with a load.

By adopting the technical solution in the foregoing embodiment, low-voltage turn-on and/or low-current turn-off of a switch can be implemented, so that the switch is a soft switch, thereby reducing loss, and effectively improving the efficiency of the inverter circuit.

In the same way, an inverter circuit may also output the output voltage and output current shown in FIG. 11 by modulating the inverter circuit shown in FIG. 10 in a bipolar modulation manner.

FIG. 17 is a principle diagram of the inverter circuit in a T1 time period shown in FIG. 11 under bipolar modulation. As shown in FIG. 17, thick lines indicate a circuit state diagram in the T1 time period.

As shown in FIG. 17, in the T1 time period, and for a voltage of an alternating current source AC, an upper direction is a positive pole and a lower direction is a negative pole. First, a first switch Q1 in a first switch element set and a fourth switch Q4 in a fourth switch element set are controlled to be turned on, after a current output by a positive pole of a direct current source DC passes through the first inductor L, one path of current passes through the second inductor L2, the alternating current source AC, and the fourth switch Q4 and returns to a negative pole of the direct current source DC, and the other path of current passes through the capacitor C, the resistor R, and the fourth switch Q4 and returns to the negative pole of the direct current source DC. It is assumed that a flow direction of a current of the first inductor L1 is a positive direction. In the T1 time period, the first switch Q1 and the fourth switch Q4 are master switches, according to the foregoing manner, after the first switch Q1 and the fourth switch Q4 are turned on, when the current of the first inductor L1 reaches a certain value, the first switch Q1 and the fourth switch Q4 are controlled to be turned off, and according to working principles of a first bridge arm and a second bridge arm, after the first switch Q1 and the fourth switch Q4 are turned off, a second switch Q2 and a third switch Q3 should be turned on, and therefore, in the instant after the first switch Q1 and the fourth switch Q4 are turned off and before the second switch Q2 and the third switch Q3 are turned on, a second diode D2 in a second switch element set and a third diode D3 in a third switch element set are turned on, at this time, voltages at two ends of the second diode D2 and at two ends of the third diode D3 are both very small, which are specifically 0 or very small values that are close to 0, and then the second switch Q2 in the second switch element set and the third switch Q3 in the third switch element set are controlled to be turned on, so that the second switch Q2 and the third switch Q3 are turned on at a low voltage. After the second switch Q2 and the third switch Q3 are turned on at a low voltage, a current output by the positive pole of the direct current source DC, after passing through the third switch Q3, is split into two paths, one path passes through a parallel branch, that is, passes through the alternating current source AC and the second inductor L2, the other path passes through the resistor R and the capacitor C, the two paths of current converge at one end of the first inductor L1, where the one end of the first inductor L1 is near the second inductor L2 and the capacitor C, and the current after convergence returns to the negative pole of the direct current source after passing through the first inductor L1 and the second switch Q2.

Because the first inductor L1, the second inductor L2, and the capacitor C exist, after the first switch Q1 and the fourth switch Q4 are turned off, inductive currents in the first inductor L1 and the second inductor L2 still flow continuously along an original direction (that is, a positive direction). However, after the second switch Q2 and the third switch Q3 are turned on, because the direct current source DC supplies power, a current direction of the first inductor L1 is opposite to a direction of the inductive current (that is, an afterflow direction), and therefore, the current of the first inductor L1 first flows along the direction of the inductive current (that is, the positive direction), and after a period of time after the second switch Q2 and the third switch Q3 are turned on, the current of the first inductor L1 gradually decreases from a positive current to 0 and then turns to flow in a negative direction. When the current of the first inductor L1 decreases to 0 or starts to become a very small value that is close to zero in a negative direction, the second switch Q2 and the third switch Q3 are turned off, so that second switch Q2 and the third switch Q3 are turned off at a low current. At the same time, according to the working principles of the first bridge arm and the second bridge arm, the first switch Q1 and the fourth switch Q4 are turned on, and correspondingly, the first switch Q1 and the fourth switch Q4 are turned on at a low voltage. After the first switch Q1 and the fourth switch Q4 are turned on, the circuit returns to a state shown in FIG. 17, and at this time, one switch cycle in the T1 time period under bipolar modulation is completed. In the T1 time period, a waveform in the T1 time period in FIG. 11 may be output by completing hundreds of the foregoing switch cycles.

Similarly, in the T1 time period, a phase of an output voltage is the same phase as that of an output current, and a working principle of an inverter in this state is pure active output.

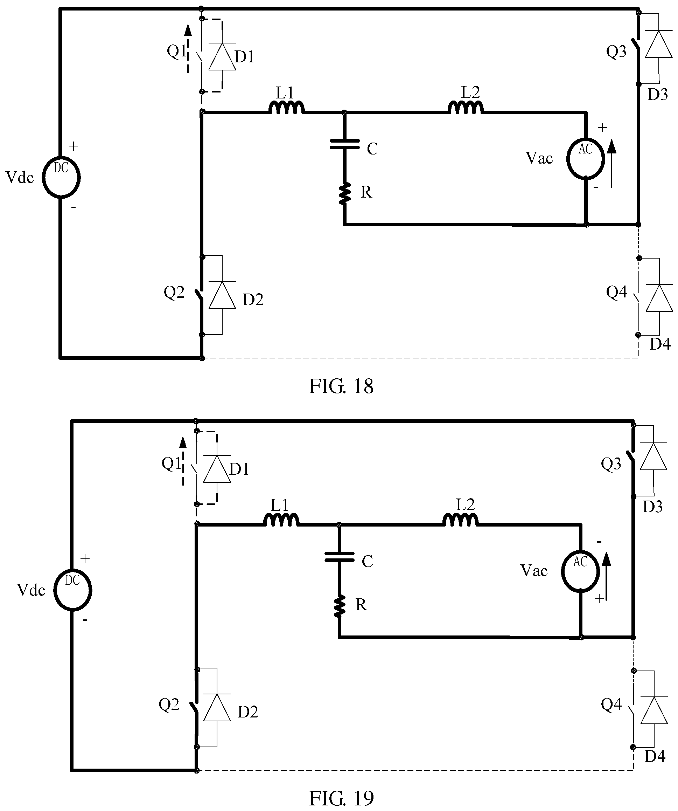

FIG. 18 is a principle diagram of the inverter circuit in a T2 time period shown in FIG. 11 under bipolar modulation. As shown in FIG. 18, thick lines indicate a circuit state diagram in the T2 time period.

As shown in FIG. 18, in the T2 time period, for a voltage of an alternating current source AC, an upper direction is a positive pole and a lower direction is a negative pole. A second switch Q2 and a third switch Q3 are master switches, and first the second switch Q2 and the third switch Q3 are controlled to be turned on, where for a current flow direction analysis, reference may be made to the description of the foregoing embodiment, and at this time, correspondingly, the current of the first inductor L1 is in a negative direction. When the current of the first inductor L1 in a negative direction increases to a certain value, the second switch Q2 and the third switch Q3 are turned off. According to the working principles of the first bridge arm and the second bridge arm, at this time, it is required to turn on a first switch Q1 and a fourth switch Q4, and after the second switch Q2 and the third switch Q3 are turned off, an inductive current of the first inductor L1 flows continuously along a negative direction. After the first switch Q1 and the fourth switch Q4 are turned on, the current of the first inductor L1 is enabled to flow towards a positive direction. At this time, correspondingly, the current of the first inductor L1 first should flow continuously along a negative direction, and when the inductive current in a negative direction gradually increases to zero, the current flows along a positive direction. When the current of the first inductor L1 gradually increases from a negative value to zero to starts to become a very small positive value, the first switch Q1 and the fourth switch Q4 are then turned off, so that the first switch Q1 and the fourth switch Q4 are turned off at a low current. According to the working principles of the first bridge arm and the second bridge arm, at this time, it is required to turn on the second switch Q2 and the third switch Q3, and correspondingly, the second switch Q2 and the third switch Q3 are turned on at a low voltage. After the second switch Q2 and the third switch Q3 are turned on, the circuit returns to a state shown in FIG. 18, and at this time, one switch cycle in the T2 time period under bipolar modulation is completed. In the T2 time period, a waveform in the T2 time period in FIG. 11 may be output by completing hundreds of the foregoing switch cycles.

In the time period T2 shown in FIG. 18, a phase of an output voltage is opposite to that of an output current, and the mains electricity pours reactive power into the inverter.

FIG. 19 is a principle diagram of the inverter circuit in a T3 time period shown in FIG. 11 under bipolar modulation. As shown in FIG. 19, thick lines indicate a circuit state diagram in the T3 time period.

As shown in FIG. 19, the circuit state diagram in the T3 time period differs from the circuit state diagram in the T2 time period shown in FIG. 18 only in that: In the FIG. 19, for a voltage of an alternating current source AC, an upper direction is a negative pole and a lower direction is a positive pole, which are opposite to the positive and negative poles of the alternating current source AC in FIG. 18. For a control principle, reference is made to the description of the embodiment shown in FIG. 18, which is not repeated herein. In the time period T3 shown in FIG. 19, a phase of an output voltage is the same as that of an output current, and a working principle of an inverter in this state is pure active output.

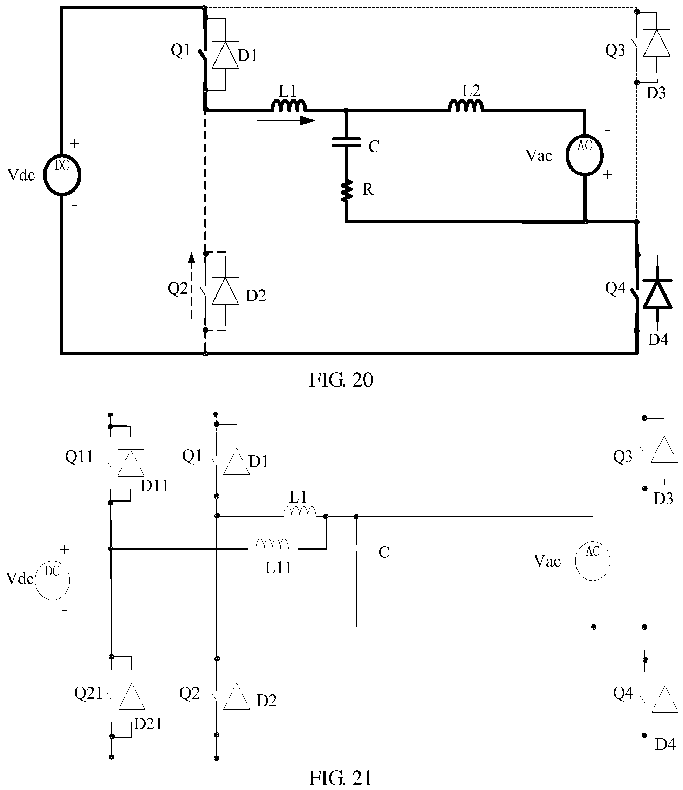

FIG. 20 is a principle diagram of the inverter circuit in a T4 time period shown in FIG. 11 under bipolar modulation. As shown in FIG. 20, thick lines indicate a circuit state diagram in the T4 time period.

As shown in FIG. 20, the circuit state diagram in the T4 time period differs from the circuit state diagram in the T4 time period shown in FIG. 17 only in that: In the FIG. 20, for a voltage of an alternating current source AC, an upper direction is a negative pole and a lower direction is a positive pole, which are opposite to the positive and negative poles of the alternating current source AC in FIG. 17. For a control principle, reference is made to the description of the embodiment shown in FIG. 17, which is not repeated herein.

By adopting the technical solution in the foregoing embodiment, under bipolar modulation, low-voltage turn-on and/or low-current turn-off of a switch can be implemented, so that the switch is a soft switch, thereby reducing loss, and effectively improving the efficiency of the inverter circuit.

FIG. 21 is a schematic diagram of an inverter circuit according to another embodiment of the present invention. As shown in FIG. 21, the inverter circuit in this embodiment, on the basis of the inverter circuit shown in FIG. 5, further includes at least one third bridge arm, where each third bridge arm in the at least one third bridge arm includes a fifth switch element set and a sixth switch element set that are connected in series. The fifth switch element set includes a fifth switch Q11 and a fifth diode D11 that are connected in parallel, a negative pole of the fifth diode D11 is connected to a positive pole of a direct current source DC, the sixth switch element set includes a sixth switch Q21 and a sixth diode D21 that are connected in parallel, and a positive pole of the sixth diode D21 is connected to a negative pole of the direct current source DC.

The inverter circuit further includes at least one third inductor L11, where each third inductor Lllof the at least one third inductor L11 corresponds to each third bridge arm of the at least one third bridge arm; and one end of each third inductor L11 of the at least one third inductor L11 is connected to a circuit between the fifth switch element set and the sixth switch element set of the corresponding third bridge arm, and the other end is connected to one end of a first inductor L1, where the one end of the first inductor L1 is near a capacitor C.

As shown in FIG. 21, adding one third bridge arm is taken as an example in FIG. 21, and according to the description of the foregoing embodiment, multiple third bridge arms may be added in the inverter circuit shown in FIG. 21, which is not repeated herein.

Similarly, at least one third bridge arm may be added in the inverter circuit in the embodiment shown in FIG. 10 to form another embodiment of the inverter circuit in the present invention, and for details, reference may be made to the description of the foregoing embodiment, which are not repeated herein.

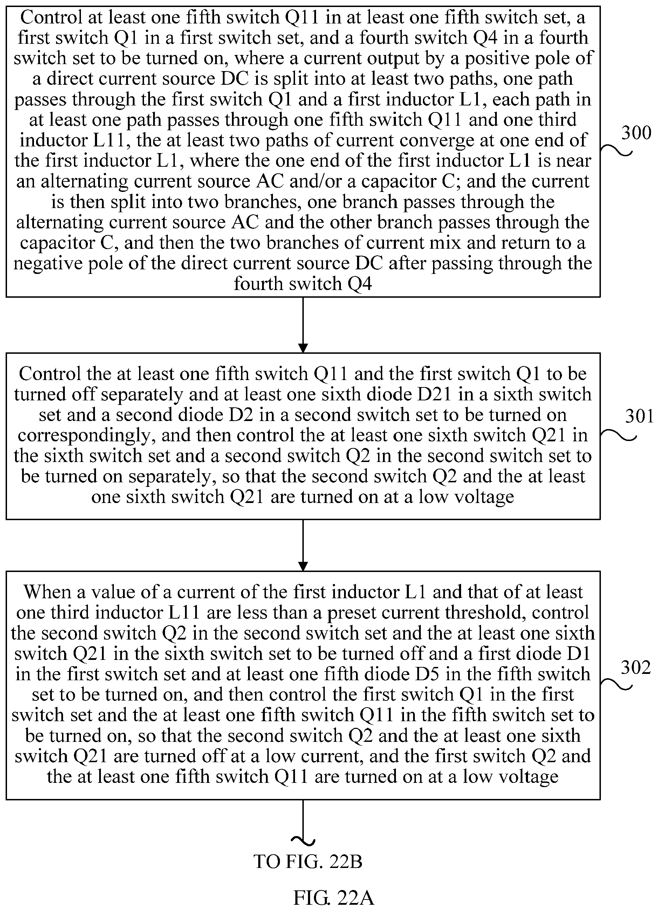

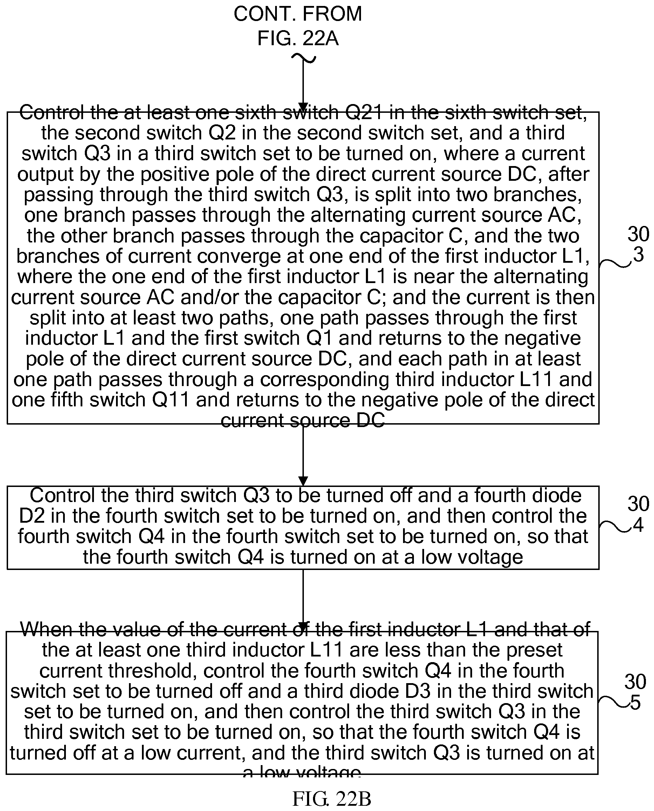

FIG. 22 is a flow chart of a control method of the inverter circuit of the embodiment shown in FIG. 21 according to an embodiment of the present invention. As shown in FIG. 22, the control method of the inverter circuit in this embodiment may specifically include the following steps:
300. Control at least one fifth switch Q11 in at least one fifth switch element set, a first switch Q1 in a first switch element set, and a fourth switch Q4 in a fourth switch element set to be turned on, where a current output by a positive pole of a direct current source DC is split into at least two paths, one path passes through the first switch Q1 and a first inductor L1, each path in at least one path passes through one fifth switch Q11 and one third inductor L11, the at least two paths of current converge at one end of the first inductor L1, where the one end of the first inductor L1 is near an alternating current source AC and/or a capacitor C; and the current is then split into two branches, one branch passes through the alternating current source AC and the other branch passes through the capacitor C, and then the two branches of current mix and return to a negative pole of the direct current source DC after passing through the fourth switch Q4.

It is assumed that a flow direction of a current of the first inductor L1 in 300 is a positive direction.

301. Control the at least one fifth switch Q11 and the first switch Q1 to be turned off separately and at least one sixth diode D21 in a sixth switch element set and a second diode D2 in a second switch element set to be turned on correspondingly, and then control the at least one sixth switch Q21 in the sixth switch element set and a second switch Q2 in the second switch element set to be turned on separately, so that the second switch Q2 and the at least one sixth switch Q21 are turned on at a low voltage.

By adopting the control method in the foregoing embodiment, control performed on the inverter shown in FIG. 21 may be implemented, so as to implement low-voltage turn-on of a switch, so that the switch is a soft switch, thereby reducing loss, and effectively improving the efficiency of the inverter circuit.

Further, optionally, after the foregoing step 301, the method may further include the following content:
302. When a value of a current of the first inductor L1 and that of at least one third inductor L11 are less than a preset current threshold, control the second switch Q2 in the second switch element set and the at least one sixth switch Q21 in the sixth switch element set to be turned off and a first diode D1 in the first switch element set and at least one fifth diode D11 in the fifth switch element set to be turned on, and then control the first switch Q1 in the first switch element set and the at least one fifth switch Q11 in the fifth switch element set to be turned on, so that the second switch Q2 and the at least one sixth switch Q21 are turned off at a low current, and the first switch Q1 and the at least one fifth switch Q11 are turned on at a low voltage.

Specifically, the preset current threshold is a very small value that is close to zero, for example, may be a current value that is less than 1 A. Specifically, when the value of the current of the first inductor L1 and that of the at least one third inductor L11 are zero or very small values that are close to zero, the second switch Q2 in the second switch element set and the at least one sixth switch Q21 in the sixth switch element set are controlled to be turned off.

Further, optionally, after the foregoing step 302, the method may further include the following content.

303. Control the at least one sixth switch Q21 in the sixth switch element set, the second switch Q2 in the second switch element set, and a third switch Q3 in a third switch element set to be turned on, where a current output by the positive pole of the direct current source DC, after passing through the third switch Q3, is split into two branches, one branch passes through the alternating current source AC, the other branch passes through the capacitor C, and the two branches of current converge at one end of the first inductor L1, where the one end of the first inductor L1 is near the alternating current source AC and/or the capacitor C; and the current is then split into at least two paths, one path passes through the first inductor L1 and the first switch Q1 and returns to the negative pole of the direct current source DC, and each path in at least one path passes through a corresponding third inductor L11 and one fifth switch Q11 and returns to the negative pole of the direct current source DC.

A corresponding flow direction of a current of the first inductor L1 in 303 is a negative direction.

304. Control the third switch Q3 to be turned off and a fourth diode D4 in the fourth switch element set to be turned on, and then control the fourth switch Q4 in the fourth switch element set to be turned on, so that the fourth switch Q4 is turned on at a low voltage.

Further, optionally, after the foregoing step 303, the method may further include the following content:
305. When the value of the current of the first inductor L1 and that of the at least one third inductor L11 are less than the preset current threshold, control the fourth switch Q4 in the fourth switch element set to be turned off and a third diode D3 in the third switch element set to be turned on, and then control the third switch Q3 in the third switch element set to be turned on, so that the fourth switch Q4 is turned off at a low current, and the third switch Q3 is turned on at a low voltage.

In this embodiment, the technical solution of the present invention is described by taking that a parallel branch includes one alternating current source AC as an example, and in an actual application, the alternating current source AC may be replaced with a load.

Because adding one third bridge arm is taken as an example in the inverter circuit shown in FIG. 21, in the foregoing 300 to 304, a corresponding control process may also be implemented by taking one third bridge arm as an example, and at this time, there are one corresponding fifth switch element set and one corresponding sixth switch element set, that is, there are one corresponding fifth switch Q11, one corresponding fifth diode D11, one corresponding sixth switch Q21, and one corresponding sixth diode D21.

The control method in the embodiment shown in FIG. 22 is the control on the inverter circuit in the embodiment shown in FIG. 21 under unipolar control.

In the embodiment shown in FIG. 21, the third bridge arm and the first bridge arm have the same function and have the same manner of implementing control. That is, the fifth switch Q11 is equivalent to the first switch Q in the inverter circuit shown in FIG. 21; the sixth switch Q21 is equivalent to the second switch Q2 in the inverter circuit shown in FIG. 21; and the third inductor L11 is equivalent to the first inductor L1 in the inverter circuit shown in FIG. 21. Therefore, an implementation mechanism of the control method in the embodiment shown in FIG. 22 is similar to that of the control methods in the corresponding embodiments shown in FIG. 6 and FIG. 8, where a manner of controlling the fifth switch Q11 in the third bridge arm is the same as that of controlling the first switch Q1, a manner of controlling the sixth switch Q21 is the same as that of controlling the second switch Q2, a manner of controlling the third inductor L11 is the same as that of controlling the first inductor L1, and therefore, specifically, a control process in the embodiment shown in FIG. 22 may be implemented with reference to the manners described in the embodiments shown in FIG. 6 and FIG. 8.

By adopting the technical solution in the foregoing embodiment, low-voltage turn-on and/or low-current turn-off of a switch can be implemented, so that the switch is a soft switch, thereby reducing loss, and effectively improving the efficiency of the inverter circuit.

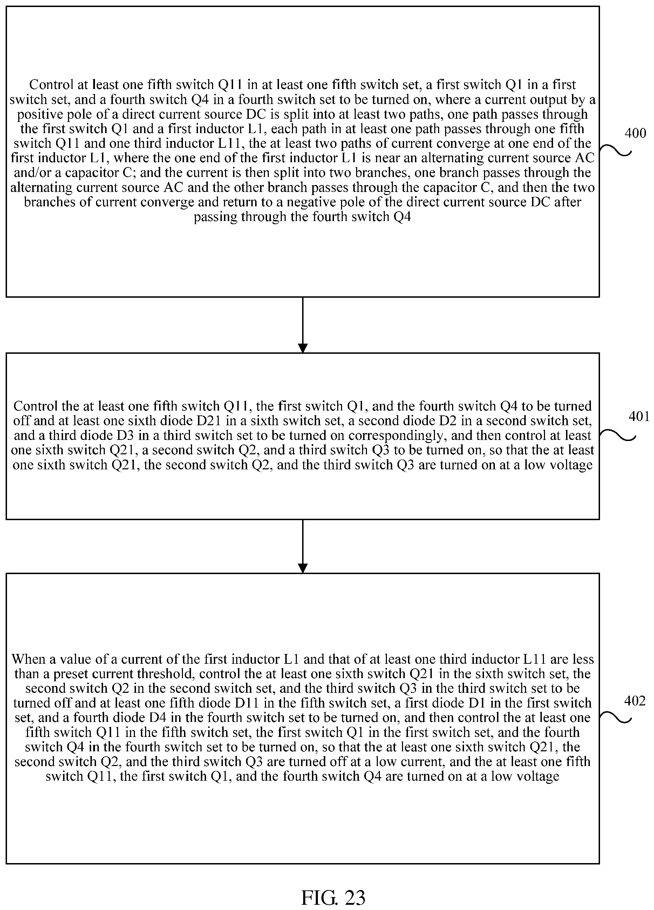

FIG. 23 is a flow chart of another control method of the inverter circuit shown in FIG. 21 according to an embodiment of the present invention. As shown in FIG. 23, the control method of the inverter circuit in this embodiment may specifically include the following steps:
400. Control at least one fifth switch Q11 in at least one fifth switch element set, a first switch Q1 in a first switch element set, and a fourth switch Q4 in a fourth switch element set to be turned on, where a current output by a positive pole of a direct current source DC is split into at least two paths, one path passes through the first switch Q1 and a first inductor L1, each path in at least one path passes through one fifth switch Q11 and one third inductor L11, the at least two paths of current converge at one end of the first inductor L1, where the one end of the first inductor L1 is near an alternating current source AC and/or a capacitor C; and the current is then split into two branches, one branch passes through the alternating current source AC and the other branch passes through the capacitor C, and then the two branches of current converge and return to a negative pole of the direct current source DC after passing through the fourth switch Q4.

It is assumed that a flow direction of a current of the first inductor L1 in 400 is a positive direction.

401. Control the at least one fifth switch Q11, the first switch Q1, and the fourth switch Q4 to be turned off and at least one sixth diode D21 in a sixth switch element set, a second diode D2 in a second switch element set, and a third diode D3 in a third switch element set to be turned on correspondingly, and then control at least one sixth switch Q21, a second switch Q2, and a third switch Q3 to be turned on, so that the at least one sixth switch Q21, the second switch Q2, and the third switch Q3 are turned on at a low voltage.

Optionally, after step 401 in the foregoing embodiment, the method may further include:
402. When a value of a current of the first inductor L1 and that of at least one third inductor L11 are less than a preset current threshold, control the at least one sixth switch Q21 in the sixth switch element set, the second switch Q2 in the second switch element set, and the third switch Q3 in the third switch element set to be turned off and at least one fifth diode D11 in the fifth switch element set, a first diode D1 in the first switch element set, and a fourth diode D4 in the fourth switch element set to be turned on, and then control the at least one fifth switch Q11 in the fifth switch element set, the first switch Q1 in the first switch element set, and the fourth switch Q4 in the fourth switch element set to be turned on, so that the at least one sixth switch Q21, the second switch Q2, and the third switch Q3 are turned off at a low current, and the at least one fifth switch Q11, the first switch Q1, and the fourth switch Q4 are turned on at a low voltage.

It should be noted that, in the foregoing embodiment, when at least one third bridge arm is added, at this time, correspondingly, it is required to add at least one third inductor L11, and at this time, it is also required to control time that a current of the first inductor L1 reaches a peak to be staggered with time that a current of the at least one third inductor L11 reaches a peak, thereby reducing a ripple, so that output quality is better.

In this embodiment, the technical solution of the present invention is described by taking that a parallel branch includes only one alternating current source AC as an example, and in an actual application, the alternating current source AC may be replaced with a load.

Because adding one third bridge arm is taken as an example in the inverter circuit shown in FIG. 23, in the foregoing 400 to 402, a corresponding control process may also be implemented by taking one third bridge arm as an example, and at this time, there are one corresponding fifth switch element set and one corresponding sixth switch element set, that is, there are one corresponding fifth switch Q11, one corresponding fifth diode D11, one corresponding sixth switch Q21, and one corresponding sixth diode D21.

The control method in the embodiment shown in FIG. 23 is the control on the inverter circuit in the embodiment shown in FIG. 21 under bipolar control.

Similarly, an implementation mechanism of the control method in the embodiment shown in FIG. 23 is similar to that of the control methods in the corresponding embodiments shown in FIG. 7 and FIG. 9, where a manner of controlling the fifth switch Q11 in the third bridge arm is the same as that of controlling the first switch Q1, a manner of controlling the sixth switch Q21 is the same as that of controlling the second switch Q2, and a manner of controlling the third inductor L11 is the same as that of controlling the first inductor L1, and therefore, specifically, a control process in the embodiment shown in FIG. 23 may be implemented with reference to the manners described in the embodiments shown in FIG. 7 and FIG. 9.

Similarly, the control under unipolar modulation and the control under bipolar modulation on the inverter circuit shown in FIG. 21 may be implemented with reference to control principles of the control under unipolar modulation and the control under bipolar modulation on the inverter circuit shown in FIG. 10, and for details, reference is made to the description of the foregoing embodiment, which are not repeated herein.

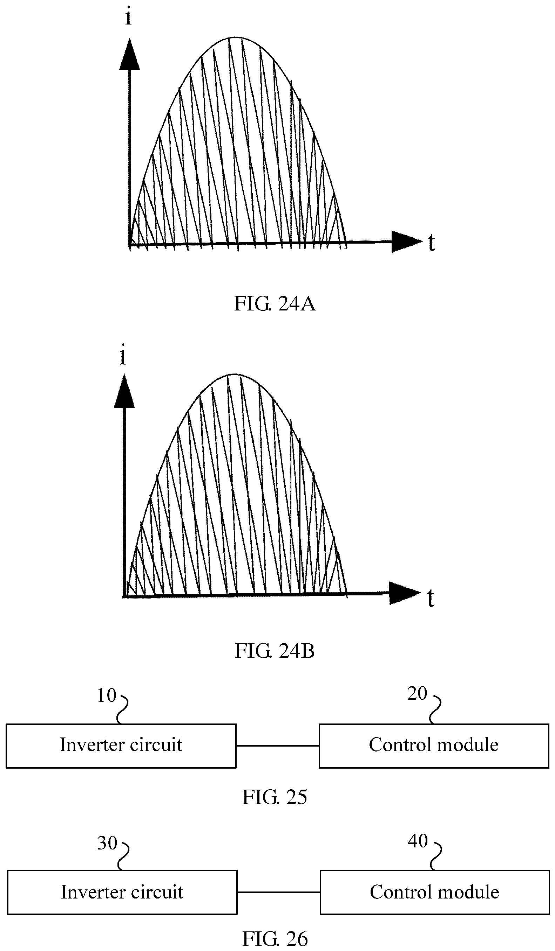

FIG. 24A is another relationship diagram of an output current i and time t in a T4+T1 time period. FIG. 24B is another relationship diagram of an output current i and time t in a T4+T1 time period. FIG. 24A and FIG. 24B correspond to a positive current output state diagram of the inverter circuit shown in FIG. 21. FIG. 24A and FIG. 24B correspond to FIG. 13A and FIG. 13B respectively, and only differ from FIG. 13A and FIG. 13B in that, in FIG. 24A and FIG. 24B, there are two jagged lines, which indicate a current of a first inductor L1 and a current of a third inductor L11 respectively. As shown in FIG. 24A and FIG. 24B, it is required to control time that the current of the first inductor L1 reaches a peak to be staggered with time that a current of at least one third inductor L11 reaches a peak, thereby reducing a ripple, so that output quality is better.

By adopting the technical solution in the foregoing embodiment, low-voltage turn-on and/or low-current turn-off of a switch can be implemented, so that the switch is a soft switch, thereby reducing loss, and effectively improving the efficiency of the inverter circuit.

Similarly, by adopting the control method, shown in FIG. 22 or FIG. 23, for the inverter circuit shown in FIG. 21, active output and reactive output of a current of the inverter shown in FIG. 21 may also be implemented, which is not repeated herein.

FIG. 25 is a schematic structural diagram of an inverter circuit control device according to an embodiment of the present invention. As shown in FIG. 25, the inverter circuit control device in this embodiment includes an inverter circuit 10 and a control module 20.

The inverter circuit 10 in this embodiment includes a direct current source, a first bridge arm, and a second bridge arm, where the first bridge arm is connected to a positive pole and a negative pole of the direct current source, the second bridge arm is connected to the positive pole and the negative pole of the direct current source, and the first bridge arm and the second bridge arm are disposed in parallel; the first bridge arm includes a first switch element set and a second switch element set that are connected in series, the first switch element set includes a first switch and a first diode that are connected in parallel, a negative pole of the first diode is connected to the positive pole of the direct current source, the second switch element set includes a second switch and a second diode that are connected in parallel, a positive pole of the second diode is connected to the negative pole of the direct current source; the second bridge arm includes a third switch element set and a fourth switch element set that are connected in series, the third switch element set includes a third switch and a third diode that are connected in parallel, a negative pole of the third diode is connected to the positive pole of the direct current source, the fourth switch element set includes a fourth switch and a fourth diode that are connected in parallel, and a positive pole of the fourth diode is connected to the negative pole of the direct current source; and the inverter circuit further includes a filter circuit, where the filter circuit includes a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch includes an alternating current source or a load.

The control module 20 is connected to the inverter circuit 10, and is configured to control the first switch in the first switch element set and the fourth switch in the fourth switch element set of the inverter circuit 10 to be turned on, where a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch.

The control module 20 is further configured to control the first switch to be turned off and the second diode in the second switch element set to be turned on, and then control the second switch in the second switch element set to be turned on, so that the second switch is turned on at a low voltage.

It should be noted that, the inverter circuit 10 in this embodiment may specifically adopt the inverter circuit in the embodiment shown in FIG. 5, and specifically, reference may be made to the description of the embodiment shown in FIG. 5, which is not repeated herein.

The control module 20 is specifically configured to perform control on the inverter circuit 10 by adopting the control method of the inverter circuit shown in FIG. 6, so that a switch in the inverter circuit 10 may be turned on at a low voltage.

Optionally, the inverter circuit 10 in this embodiment may also adopt the inverter circuit shown in FIG. 10 or FIG. 21, and specifically, reference may be made to the description of the embodiment shown in FIG. 10 or FIG. 21, which is not repeated herein. Correspondingly, the control module 20 may also perform control on the inverter circuit 10 by adopting the control method of the inverter circuit shown in FIG. 8 or FIG. 22, so that a switch in the inverter circuit 10 may be turned on at a low voltage and/or turned off at a low current.

With the inverter circuit control device in this embodiment, through the control of a control module, a switch in an inverter circuit may be turned on at a low voltage and/or turned off at a low current, so that the switch is a soft switch, thereby reducing loss, and effectively improving the efficiency of the inverter circuit.

FIG. 26 is a schematic structural diagram of an inverter circuit control device according to an embodiment of the present invention. As shown in FIG. 26, the inverter circuit control device in this embodiment includes an inverter circuit 30 and a control module 40.

The inverter circuit 30 in this embodiment includes a direct current source, a first bridge arm, and a second bridge arm, where the first bridge arm is connected to a positive pole and a negative pole of the direct current source, the second bridge arm is connected to the positive pole and the negative pole of the direct current source, and the first bridge arm and the second bridge arm are disposed in parallel; the first bridge arm includes a first switch element set and a second switch element set that are connected in series, the first switch element set includes a first switch and a first diode that are connected in parallel, a negative pole of the first diode is connected to the positive pole of the direct current source, the second switch element set includes a second switch and a second diode that are connected in parallel, a positive pole of the second diode is connected to the negative pole of the direct current source; the second bridge arm includes a third switch element set and a fourth switch element set that are connected in series, the third switch element set includes a third switch and a third diode that are connected in parallel, a negative pole of the third diode is connected to the positive pole of the direct current source, the fourth switch element set includes a fourth switch and a fourth diode that are connected in parallel, and a positive pole of the fourth diode is connected to the negative pole of the direct current source; and the inverter circuit further includes a filter circuit, where the filter circuit includes a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch includes an alternating current source or a load.

The control module 40 is connected to the inverter circuit 30, and is configured to control the first switch in the first switch element set and the fourth switch in the fourth switch element set of the inverter circuit 30 to be turned on, where a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch.

The control module 40 is further configured to control the first switch and the fourth switch to be turned off and the second diode in the second switch element set and the third diode in the third switch element set to be turned on, and then control the second switch in the second switch element set and the third switch in the third switch element set to be turned on, so that the second switch and the third switch are turned on at a low voltage.

It should be noted that, the inverter circuit 30 in this embodiment may specifically adopt the inverter circuit in the embodiment shown in FIG. 5, and specifically, reference may be made to the description of the embodiment shown in FIG. 5, which is not repeated herein.

The control module 40 is specifically configured to perform control on the inverter circuit 30 by adopting the control method of the inverter circuit shown in FIG. 7, so that a switch in the inverter circuit 30 may be turned on at a low voltage.

Optionally, the inverter circuit 30 in this embodiment may also adopt the inverter circuit shown in FIG. 10 or FIG. 21, and specifically, reference may be made to the description of the embodiment shown in FIG. 10 or FIG. 21, which is not repeated herein. Correspondingly, the control module 40 may also perform control on the inverter circuit 30 by adopting the control method of the inverter circuit shown in FIG. 9 or FIG. 23, so that a switch in the inverter circuit 30 may be turned on at a low voltage and/or turned off at a low current.

With the inverter circuit control device in this embodiment, through the control of a control module, a switch in an inverter circuit can be turned on at a low voltage and/or turned off at a low current, so that the switch is a soft switch, thereby reducing loss, and effectively improving the efficiency of the inverter circuit.

Persons of ordinary skill in the art may understand that all or a part of the steps in each of the foregoing method embodiments may be implemented by a program instructing relevant hardware. The program may be stored in a computer readable storage medium. When the program is run, the steps in each of the foregoing method embodiments are performed. The storage medium includes any medium that is capable of storing program codes, such as a ROM, a RAM, a magnetic disk, or an optical disk.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all technical features of the technical solutions; however, these modifications or replacements do not cause the essence of corresponding technical solutions to depart from the scope of the technical solutions in the embodiments of the present invention.

## Claims

1. A control method of the inverter circuit, the inverter circuit, comprising a direct current source, a first bridge arm, and a second bridge arm, wherein the first bridge arm is connected to a positive pole and a negative pole of the direct current source respectively, the second bridge arm is connected to the positive pole and the negative pole of the direct current source respectively, and the first bridge arm and the second bridge arm are disposed in parallel; the first bridge arm comprises a first switch element set and a second switch element set that are connected in series, the first switch element set comprises a first switch and a first diode that are connected in parallel, a negative pole of the first diode is connected to the positive pole of the direct current source, the second switch element set comprises a second switch and a second diode that are connected in parallel, and a positive pole of the second diode is connected to the negative pole of the direct current source; the second bridge arm comprises a third switch element set and a fourth switch element set that are connected in series, the third switch element set comprises a third switch and a third diode that are connected in parallel, a negative pole of the third diode is connected to the positive pole of the direct current source, the fourth switch element set comprises a fourth switch and a fourth diode that are connected in parallel, and a positive pole of the fourth diode is connected to the negative pole of the direct current source; and the inverter circuit further comprises a filter circuit, wherein the filter circuit comprises a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch comprises an alternating current source or a load, wherein the method comprising:
during a first time period of one cycle of the inverter, completing multiple switch cycles, wherein during said each switch cycle the method comprising:
controlling the first switch in the first switch element set and the fourth switch in the fourth switch element set to be turned on, wherein a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch;
controlling the first switch to be turned off after a controlled turn-on time implementing control on the output current and the second diode in the second switch element set to be turned on, and then controlling the second switch in the second switch element set to be turned on, so that the second switch is turned on at a low voltage; and
when a value of a current of the first inductor is less than a preset current threshold, controlling the second switch in the second switch element set to be turned off and the first diode in the first switch element set to be turned on, and then controlling the first switch in the first switch element set to be turned on starting the next switch cycle, so that the second switch is turned off at a low current and the first switch is turned on at a low voltage.

2. The method according to claim 1, wherein the preset current threshold is less than 1 A.

3. The method according to claim 2, further comprising:
when the parallel branch connected in parallel to two ends of the capacitor comprises an alternating current source, controlling the second switch in the second switch element set and the fourth switch in the fourth switch element set to be turned on, wherein one path of output current of the alternating current source passes through the capacitor and returns to a negative pole of the alternating current source, and the other path passes through the first inductor, the second switch, and the fourth switch and returns to the negative pole of the alternating current source; and
controlling the second switch to be turned off and the first diode in the first switch element set to be turned on, and then controlling the first switch in the first switch element set to be turned on, so that the first switch is turned on at a low voltage.

4. The method according to claim 3, further comprising:
when the value of the current of the first inductor is less than the preset current threshold, controlling the first switch in the first switch element set to be turned off and the second diode in the second switch element set to be turned on, and then turning on the second switch in the second switch element set, so that the first switch is turned off at a low current and the second switch is turned on at a low voltage.

5. The method according to claim 1, further comprising:
controlling the second switch in the second switch element set and the third switch in the third switch element set to be turned on, wherein a current output by the positive pole of the direct current source, after passing through the third switch, is split into two paths, one path passes through the parallel branch and the other path passes through the capacitor, and then the two paths of current mix and return to the negative pole of the direct current source after passing through the first inductor and the second switch;
controlling the third switch to be turned off and the fourth diode in the fourth switch element set to be turned on, and then controlling the fourth switch in the fourth switch element set to be turned on, so that the fourth switch is turned on at a low voltage.

6. The method according to claim 5, further comprising: when the value of the current of the first inductor is less than the preset current threshold, controlling the fourth switch in the fourth switch element set to be turned off and the third diode in the third switch element set to be turned on, and then controlling the third switch in the third switch element set to be turned on, so that the fourth switch is turned off at a low current and the third switch is turned on at a low voltage.

7. The method according to claim 1, further comprising:
when the parallel branch connected in parallel to two ends of the capacitor comprises an alternating current source, controlling the second switch in the second switch element set and the fourth switch in the fourth switch element set to be turned on, wherein one path of output current of the alternating current source passes through the capacitor and returns to a negative pole of the alternating current source, and the other path passes through the fourth switch, the second switch, and the first inductor and returns to the negative pole of the alternating current source; and
after predetermined time, controlling the fourth switch to be turned off and the third diode in the third switch element set to be turned on, and then controlling the third switch in the third switch element set to be turned on, so that the third switch is turned on at a low voltage.

8. The method according to claim 7, further comprising:
when the value of the current of the first inductor is less than the preset current threshold, controlling the third switch in the third switch element set to be turned off and the fourth diode in the fourth switch element set to be turned on, and then turning on the fourth switch in the fourth switch element set, so that the fourth switch is turned off at a low current and the second switch is turned on at a low voltage.

9. The method according to any one of claims 1 to 8, wherein the inverter circuit further comprises at least one third bridge arm, each of the at least one third bridge arm comprises a fifth switch element set and a sixth switch element set that are connected in series, the fifth switch element set comprises a fifth switch and a fifth diode that are connected in parallel, a negative pole of the fifth diode is connected to the positive pole of the direct current source, the sixth switch element set comprises a sixth switch and a sixth diode that are connected in parallel, and a positive pole of the sixth diode is connected to the negative pole of the direct current source; and the inverter circuit further comprises at least one third inductor, each third inductor of the at least one third inductor corresponds to one third bridge arm of the at least one third bridge arm; and one end of each third inductor of the at least one third inductor is connected to a circuit between the fifth switch element set and the sixth switch element set of the corresponding third bridge arm, and the other end is connected to one end of the first inductor, wherein the one end of the first inductor is near the capacitor, the method further comprises:
adopting a control manner, which corresponds to the first switch and the first diode in the first switch element set, for the fifth switch and the at least one fifth diode in the fifth switch element set;
adopting a control manner, which corresponds to the second switch and the second diode in the second switch element set, for the sixth switch and the at least one sixth diode in the sixth switch element set; and
adopting a control manner, which corresponds to the first inductor, for the at least one third inductor.

10. A control method of the inverter circuit, the inverter circuit, comprising a direct current source, a first bridge arm, and a second bridge arm, wherein the first bridge arm is connected to a positive pole and a negative pole of the direct current source respectively, the second bridge arm is connected to the positive pole and the negative pole of the direct current source respectively, and the first bridge arm and the second bridge arm are disposed in parallel; the first bridge arm comprises a first switch element set and a second switch element set that are connected in series, the first switch element set comprises a first switch and a first diode that are connected in parallel, a negative pole of the first diode is connected to the positive pole of the direct current source, the second switch element set comprises a second switch and a second diode that are connected in parallel, and a positive pole of the second diode is connected to the negative pole of the direct current source; the second bridge arm comprises a third switch element set and a fourth switch element set that are connected in series, the third switch element set comprises a third switch and a third diode that are connected in parallel, a negative pole of the third diode is connected to the positive pole of the direct current source, the fourth switch element set comprises a fourth switch and a fourth diode that are connected in parallel, and a positive pole of the fourth diode is connected to the negative pole of the direct current source; and the inverter circuit further comprises a filter circuit, wherein the filter circuit comprises a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch comprises an alternating current source or a load, wherein the method comprising:
during a first time period of one cycle of the inverter, completing multiple switch cycles, wherein during said each switch cycle the method comprising:
controlling the first switch in the first switch element set and the fourth switch in the fourth switch element set to be turned on, wherein a current output by the positive pole of the direct current source, after passing through the first switch and the first inductor, is split into two paths, one path passes through the parallel branch, and the other path passes through the capacitor, and then the two paths of current converge and return to the negative pole of the direct current source after passing through the fourth switch;
controlling the first switch and the fourth switch to be turned off after a controlled turn-on time implementing control on the output current and the second diode in the second switch element set and the third diode in the third switch element set to be turned on, and then controlling the second switch in the second switch element set and the third switch in the third switch element set to be turned on, so that the second switch and the third switch are turned on at a low voltage; and
when a value of a current of the first inductor is less than a preset current threshold, controlling the second switch in the second switch element set and the third switch in the third switch element set to be turned off and the first diode in the first switch element set and the fourth diode in the fourth switch element set to be turned on, and then controlling the first switch in the first switch element set and the fourth switch in the fourth switch element set to be turned on starting the next switch cycle, so that the second switch and the third switch are turned off at a low current, and the first switch and the fourth switch are turned on at a low voltage.

11. The method according to claim 10, wherein the preset current threshold is less than 1 A.

12. The method according to claim 10 or 11, wherein the inverter circuit further comprises at least one third bridge arm, each of the at least one third bridge arm comprises a fifth switch element set and a sixth switch element set that are connected in series, the fifth switch element set comprises a fifth switch and a fifth diode that are connected in parallel, a negative pole of the fifth diode is connected to the positive pole of the direct current source, the sixth switch element set comprises a sixth switch and a sixth diode that are connected in parallel, and a positive pole of the sixth diode is connected to the negative pole of the direct current source; and the inverter circuit further comprises at least one third inductor, each third inductor of the at least one third inductor corresponds to one third bridge arm of the at least one third bridge arm; and one end of each third inductor of the at least one third inductor is connected to a circuit between the fifth switch element set and the sixth switch element set of the corresponding third bridge arm, and the other end is connected to one end of the first inductor, wherein the one end of the first inductor is near the capacitor; the method further comprises:
adopting a control manner, which corresponds to the first switch and the first diode in the first switch element set, for the fifth switch and the at least one fifth diode in the fifth switch element set;
adopting a control manner, which corresponds to the second switch and the second diode in the second switch element set, for the sixth switch and the at least one sixth diode in the sixth switch element set; and
adopting a control manner, which corresponds to the first inductor, for the at least one third inductor.

13. The method according to claim 12, further comprising:
controlling time that the current of the first inductor reaches a peak to be staggered with time that a current of the at least one third inductor reaches a peak.

14. An inverter circuit control device, comprising an inverter circuit and a control module; wherein
the inverter circuit comprises a direct current source, a first bridge arm, and a second bridge arm, wherein the first bridge arm is connected to a positive pole and a negative pole of the direct current source, the second bridge arm is connected to the positive pole and the negative pole of the direct current source, and the first bridge arm and the second bridge arm are disposed in parallel; the first bridge arm comprises a first switch element set and a second switch element set that are connected in series, the first switch element set comprises a first switch and a first diode that are connected in parallel, a negative pole of the first diode is connected to the positive pole of the direct current source, the second switch element set comprises a second switch and a second diode that are connected in parallel, and a positive pole of the second diode is connected to the negative pole of the direct current source; the second bridge arm comprises a third switch element set and a fourth switch element set that are connected in series, the third switch element set comprises a third switch and a third diode that are connected in parallel, a negative pole of the third diode is connected to the positive pole of the direct current source, the fourth switch element set comprises a fourth switch and the fourth diode that are connected in parallel, and a positive pole of the fourth diode is connected to the negative pole of the direct current source; and the inverter circuit further comprises a filter circuit, wherein the filter circuit comprises a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch comprises an alternating current source or a load;
**characterised in that** during a first time period of one cycle of the inverter, completing multiple switch cycles, wherein during said each switch cycle:
the control module is configured to control the first switch in the first switch element set and the fourth switch in the fourth switch element set to be turned on, wherein a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch;
the control module is further configured to control the first switch to be turned off after a controlled turn-on time implementing control on the output current and the second diode in the second switch element set to be turned on, and then control the second switch in the second switch element set to be turned on, so that the second switch is turned on at a low voltage; and
when a value of a current of the first inductor is less than a preset current threshold, the control module is further configured to control the second switch in the second switch element set to be turned off and the first diode in the first switch element set to be turned on, and then control the first switch in the first switch element set to be turned on starting the next switch cycle, so that the second switch is turned off at a low current and the first switch is turned on at a low voltage.

15. An inverter circuit control device, comprising an inverter circuit and a control module; wherein
the inverter circuit comprises a direct current source, a first bridge arm, and a second bridge arm, wherein the first bridge arm is connected to a positive pole and a negative pole of the direct current source, the second bridge arm is connected to the positive pole and the negative pole of the direct current source, and the first bridge arm and the second bridge arm are disposed in parallel; the first bridge arm comprises a first switch element set and a second switch element set that are connected in series, the first switch element set comprises a first switch and a first diode that are connected in parallel, a negative pole of the first diode is connected to the positive pole of the direct current source, the second switch element set comprises a second switch and a second diode that are connected in parallel, and a positive pole of the second diode is connected to the negative pole of the direct current source; the second bridge arm comprises a third switch element set and a fourth switch element set that are connected in series, the third switch element set comprises a third switch and a third diode that are connected in parallel, a negative pole of the third diode is connected to the positive pole of the direct current source, the fourth switch element set comprises a fourth switch and a fourth diode that are connected in parallel, and a positive pole of the fourth diode is connected to the negative pole of the direct current source; and the inverter circuit further comprises a filter circuit, wherein the filter circuit comprises a first inductor and a capacitor that are connected in series, the other end of the first inductor is connected to a circuit between the first switch element set and the second switch element set of the first bridge arm, the other end of the capacitor is connected to a circuit between the third switch element set and the fourth switch element set of the second bridge arm, two ends of the capacitor are connected in parallel to a parallel branch, and the parallel branch comprises an alternating current source or a load;
**characterised in that** during a first time period of one cycle of the inverter, completing multiple switch cycles, wherein during said each switch cycle:
the control module is configured to control the first switch in the first switch element set and the fourth switch in the fourth switch element set to be turned on, wherein a current output by the positive pole of the direct current source, after passing through the first switch and the first inductor, is split into two paths, one path passes through the parallel branch and the other path passes through the capacitor, and then the two paths of current converge and return to the negative pole of the direct current source after passing through the fourth switch; and
the control module is further configured to control the first switch and the fourth switch to be turned off after a controlled turn-on time implementing control on the output current and the second diode in the second switch element set and the third diode in the third switch element set to be turned on, and then control the second switch in the second switch element set and the third switch in the third switch element set to be turned on, so that the second switch and the third switch are turned on at a low voltage; and
when a value of a current of the first inductor is less than a preset current threshold, the control module is further configured to control the second switch in the second switch element set and the third switch in the third switch element set to be turned off and the first diode in the first switch element set and the fourth diode in the fourth switch element set to be turned on, and then control the first switch in the first switch element set and the fourth switch in the fourth switch element set to be turned on starting the next switch cycle, so that the second switch and the third switch are turned off at a low current, and the first switch and the fourth switch are turned on at a low voltage.

## Patentansprüche

1. Steuerverfahren der Wechselrichterschaltung, wobei die Wechselrichterschaltung eine Gleichstromquelle, einen ersten Brückenarm und einen zweiten Brückenarm umfasst, wobei der erste Brückenarm mit einem Pluspol bzw. einem Minuspol der Gleichstromquelle verbunden ist, der zweite Brückenarm mit dem Pluspol bzw. dem Minuspol der Gleichstromquelle verbunden ist und der erste Brückenarm und der zweite Brückenarm parallel angeordnet sind; der erste Brückenarm einen ersten Schaltelementsatz und einen zweiten Schaltelementsatz umfasst, die in Reihe geschaltet sind, der erste Schaltelementsatz einen ersten Schalter und eine erste Diode umfasst, die parallel geschaltet sind, ein Minuspol der ersten Diode mit dem Pluspol der Gleichstromquelle verbunden ist, der zweite Schaltelementsatz einen zweiten Schalter und eine zweite Diode umfasst, die parallel geschaltet sind, und ein Pluspol der zweiten Diode mit dem Minuspol der Gleichstromquelle verbunden ist; der zweite Brückenarm einen dritten Schaltelementsatz und einen vierten Schaltelementsatz umfasst, die in Reihe geschaltet sind, der dritte Schaltelementsatz einen dritten Schalter und eine dritte Diode umfasst, die parallel geschaltet sind, ein Minuspol der dritten Diode mit dem Pluspol der Gleichstromquelle verbunden ist, der vierte Schaltelementsatz einen vierten Schalter und eine vierte Diode umfasst, die parallel geschaltet sind, und ein Pluspol der vierten Diode mit dem Minuspol der Gleichstromquelle verbunden ist; und die Wechselrichterschaltung ferner eine Filterschaltung umfasst, wobei die Filterschaltung einen ersten Induktor und einen Kondensator umfasst, die in Reihe geschaltet sind, das andere Ende des ersten Induktors mit einer Schaltung zwischen dem ersten Schaltelementsatz und dem zweiten Schaltelementsatz des ersten Brückenarms verbunden ist, das andere Ende des Kondensators mit einer Schaltung zwischen dem dritten Schaltelementsatz und dem vierten Schaltelementsatz des zweiten Brückenarms verbunden ist, zwei Enden des Kondensators parallel zu einem parallelen Zweig verbunden sind und der parallele Zweig eine Wechselstromquelle oder eine Last umfasst, wobei das Verfahren umfasst:
während einer ersten Zeitspanne eines Zyklus des Wechselrichters, Abschließen mehrerer Schaltzyklen, wobei während des jeweiligen Schaltzyklus das Verfahren umfasst:
Steuern des ersten Schalters im ersten Schaltelementsatz und des vierten Schalters im vierten Schaltelementsatz, der eingeschaltet werden soll, wobei ein Stromausgang vom Pluspol der Gleichstromquelle, nachdem er den ersten Schalter und den ersten Induktor durchströmt hat, in zwei Pfade aufgeteilt wird, wobei der eine Pfad den parallelen Zweig und der andere Pfad den Kondensator durchströmt, und dann die beiden Strompfade konvergieren und nach dem Durchströmen des vierten Schalters zum Minuspol der Gleichstromquelle zurückkehren;
Steuern des ersten Schalters, der nach einer gesteuerten Einschaltzeit ausgeschaltet werden soll, wobei die Steuerung des Ausgangsstroms und der zweiten Diode in dem zweiten Schaltglied, das eingeschaltet werden soll, implementiert wird, und dann Steuern des zweiten Schalters in dem zweiten Schaltglied, das eingeschaltet werden soll, so dass der zweite Schalter bei einer niedrigen Spannung eingeschaltet wird; und wenn ein Wert eines Stroms des ersten Induktors kleiner als ein voreingestellter Stromschwellenwert ist, Steuern des zweiten Schalters in dem zweiten Schaltelementsatz, der ausgeschaltet werden soll, und der ersten Diode in dem ersten Schaltelementsatz, der eingeschaltet werden soll, und dann Steuern des ersten Schalters in dem ersten Schaltelementsatz, der eingeschaltet werden soll, Starten des nächsten Schaltzyklus, so dass der zweite Schalter bei einem niedrigen Strom ausgeschaltet wird und der erste Schalter bei einer niedrigen Spannung eingeschaltet wird.

2. Verfahren nach Anspruch 1, wobei der voreingestellte Stromschwellenwert kleiner als 1 A ist.

3. Verfahren nach Anspruch 2, ferner umfassend:
wenn der parallele Zweig, der parallel zu zwei Enden des Kondensators geschaltet ist, eine Wechselstromquelle umfasst, Steuern des zweiten Schalters im zweiten Schaltelementsatz und des vierten Schalters im vierten Schaltelementsatz, der eingeschaltet werden soll, wobei ein Ausgangsstrompfad der Wechselstromquelle den Kondensator durchströmt und zu einem Minuspol der Wechselstromquelle zurückkehrt, und der andere Pfad den ersten Induktor, den zweiten Schalter und den vierten Schalter durchströmt und zum Minuspol der Wechselstromquelle zurückkehrt; und
Steuern des zweiten Schalters, der ausgeschaltet werden soll, und der ersten Diode im ersten Schaltelementsatz, der eingeschaltet werden soll, und dann Steuern des ersten Schalters im ersten Schaltelementsatz, der eingeschaltet werden soll, so dass der erste Schalter bei einer niedrigen Spannung eingeschaltet wird.

4. Verfahren nach Anspruch 3, ferner umfassend:
wenn der Wert des Stroms des ersten Induktors kleiner als der voreingestellte Stromschwellenwert ist, Steuern des ersten Schalters in dem ersten Schaltelementsatz, der ausgeschaltet werden soll, und der zweiten Diode in dem zweiten Schaltelementsatz, der eingeschaltet werden soll, und dann Einschalten des zweiten Schalters in dem zweiten Schaltelementsatz, so dass der erste Schalter bei einem niedrigen Strom ausgeschaltet wird und der zweite Schalter bei einer niedrigen Spannung eingeschaltet wird.

5. Verfahren nach Anspruch 1, ferner umfassend:
Steuern des zweiten Schalters im zweiten Schaltelementsatz und des dritten Schalters im dritten Schaltelementsatz, der eingeschaltet werden soll, wobei ein Stromausgang durch den Pluspol der Gleichstromquelle, nachdem er den dritten Schalter durchströmt hat, in zwei Pfade aufgeteilt wird, wobei der eine Pfad den parallelen Zweig und der andere den Kondensator durchströmt, und sich dann die beiden Strompfade vermischen und zum Minuspol der Gleichstromquelle nach Durchströmen des ersten Induktors und des zweiten Schalters zurückkehren;
Steuern des dritten Schalters, der ausgeschaltet werden soll, und der vierten Diode im vierten Schaltelementsatz, der eingeschaltet werden soll, und dann Steuern des vierten Schalters im vierten Schaltelementsatz, der eingeschaltet werden soll, so dass der vierte Schalter bei einer niedrigen Spannung eingeschaltet wird.

6. Verfahren nach Anspruch 5, ferner umfassend: wenn der Wert des Stroms des ersten Induktors kleiner als der voreingestellte Stromschwellenwert ist, Steuern des vierten Schalters im vierten Schaltelementsatz, der ausgeschaltet werden soll, und der dritten Diode im dritten Schaltelementsatz, der eingeschaltet werden soll, und dann Steuern des dritten Schalters im dritten Schaltelementsatz, der eingeschaltet werden soll, so dass der vierte Schalter bei einem niedrigen Strom ausgeschaltet wird und der dritte Schalter bei einer niedrigen Spannung eingeschaltet wird.

7. Verfahren nach Anspruch 1, ferner umfassend:
wenn der parallele Zweig, der parallel zu zwei Enden des Kondensators geschaltet ist, eine Wechselstromquelle umfasst, Steuern des zweiten Schalters im zweiten Schaltelementsatz und des vierten Schalters im vierten Schaltelementsatz, der eingeschaltet werden soll, wobei ein Ausgangsstrompfad der Wechselstromquelle den Kondensator durchströmt und zu einem Minuspol der Wechselstromquelle zurückkehrt, und der andere Pfad den vierten Schalter, den zweiten Schalter und den ersten Induktor durchströmt und zum Minuspol der Wechselstromquelle zurückkehrt; und
nach einer vorbestimmten Zeit, Steuern des vierten Schalters, der ausgeschaltet werden soll, und der dritten Diode im dritten Schaltelementsatz, der eingeschaltet werden soll, und dann Steuern des dritten Schalters im dritten Schaltelementsatz, der eingeschaltet werden soll, so dass der dritte Schalter bei einer niedrigen Spannung eingeschaltet wird.

8. Verfahren nach Anspruch 7, ferner umfassend:
wenn der Wert des Stroms des ersten Induktors kleiner als der voreingestellte Stromschwellenwert ist, Steuern des dritten Schalters in dem dritten Schaltelementsatz, der ausgeschaltet werden soll, und der vierten Diode in dem vierten Schaltelementsatz, der eingeschaltet werden soll, und dann Einschalten des vierten Schalters in dem vierten Schaltelementsatz, so dass der vierte Schalter bei einem niedrigen Strom ausgeschaltet wird und der zweite Schalter bei einer niedrigen Spannung eingeschaltet wird.

9. Verfahren nach einem der Ansprüche 1 bis 8, wobei die Wechselrichterschaltung ferner mindestens einen dritten Brückenarm umfasst, jeder der mindestens einen dritten Brückenarme einen fünften Schaltelementsatz und einen sechsten Schaltelementsatz umfasst, die in Reihe geschaltet sind, der fünfte Schaltelementsatz einen fünften Schalter und eine fünfte Diode umfasst, die parallel geschaltet sind, ein Minuspol der fünften Diode mit dem Pluspol der Gleichstromquelle verbunden ist, der sechste Schaltelementsatz einen sechsten Schalter und eine sechste Diode umfasst, die parallel geschaltet sind, und ein Pluspol der sechsten Diode mit dem Minuspol der Gleichstromquelle verbunden ist; und die Wechselrichterschaltung ferner mindestens einen dritten Induktor umfasst, wobei jeder dritte Induktor des mindestens einen dritten Induktors einem dritten Brückenarm des mindestens einen dritten Brückenarms entspricht; und ein Ende jedes dritten Induktors des mindestens einen dritten Induktors mit einer Schaltung zwischen dem fünften Schaltelementsatz und dem sechsten Schaltelementsatz des entsprechenden dritten Brückenarms verbunden ist, und das andere Ende mit einem Ende des ersten Induktors verbunden ist, wobei das eine Ende des ersten Induktors in der Nähe des Kondensators liegt, wobei das Verfahren ferner umfasst:
Annehmen einer Steuerungsweise, die dem ersten Schalter und der ersten Diode im ersten Schalterelementsatz entspricht, für den fünften Schalter und der mindestens einen fünften Diode im fünften Schalterelementsatz;
Annehmen einer Steuerungsweise, die dem zweiten Schalter und der zweiten Diode im zweiten Schalterelementsatz entspricht, für den sechsten Schalter und die mindestens eine sechste Diode im sechsten Schalterelementsatz; und
Annehmen einer Steuerungsweise, die dem ersten Induktor entspricht, für den mindestens einen dritten Induktor.

10. Steuerverfahren der Wechselrichterschaltung, wobei die Wechselrichterschaltung eine Gleichstromquelle, einen ersten Brückenarm und einen zweiten Brückenarm umfasst, wobei der erste Brückenarm mit einem Pluspol bzw. einem Minuspol der Gleichstromquelle verbunden ist, der zweite Brückenarm mit dem Pluspol bzw. dem Minuspol der Gleichstromquelle verbunden ist und der erste Brückenarm und der zweite Brückenarm parallel angeordnet sind; der erste Brückenarm einen ersten Schaltelementsatz und einen zweiten Schaltelementsatz umfasst, die in Reihe geschaltet sind, der erste Schaltelementsatz einen ersten Schalter und eine erste Diode umfasst, die parallel geschaltet sind, ein Minuspol der ersten Diode mit dem Pluspol der Gleichstromquelle verbunden ist, der zweite Schaltelementsatz einen zweiten Schalter und eine zweite Diode umfasst, die parallel geschaltet sind, und ein Pluspol der zweiten Diode mit dem Minuspol der Gleichstromquelle verbunden ist; der zweite Brückenarm einen dritten Schaltelementsatz und einen vierten Schaltelementsatz umfasst, die in Reihe geschaltet sind, der dritte Schaltelementsatz einen dritten Schalter und eine dritte Diode umfasst, die parallel geschaltet sind, ein Minuspol der dritten Diode mit dem Pluspol der Gleichstromquelle verbunden ist, der vierte Schaltelementsatz einen vierten Schalter und eine vierte Diode umfasst, die parallel geschaltet sind, und ein Pluspol der vierten Diode mit dem Minuspol der Gleichstromquelle verbunden ist; und die Wechselrichterschaltung ferner eine Filterschaltung umfasst, wobei die Filterschaltung einen ersten Induktor und einen Kondensator umfasst, die in Reihe geschaltet sind, das andere Ende des ersten Induktors mit einer Schaltung zwischen dem ersten Schaltelementsatz und dem zweiten Schaltelementsatz des ersten Brückenarms verbunden ist, das andere Ende des Kondensators mit einer Schaltung zwischen dem dritten Schaltelementsatz und dem vierten Schaltelementsatz des zweiten Brückenarms verbunden ist, zwei Enden des Kondensators parallel zu einem parallelen Zweig verbunden sind und der parallele Zweig eine Wechselstromquelle oder eine Last umfasst, wobei das Verfahren umfasst:
während einer ersten Zeitspanne eines Zyklus des Wechselrichters, Abschließen mehrerer Schaltzyklen, wobei während des jeweiligen Schaltzyklus das Verfahren umfasst:
Steuern des ersten Schalters im ersten Schaltelementsatz und des vierten Schalters im vierten Schaltelementsatz, der eingeschaltet werden soll, wobei ein Stromausgang vom Pluspol der Gleichstromquelle, nachdem er den ersten Schalter und den ersten Induktor durchströmt hat, in zwei Pfade aufgeteilt wird, wobei der eine Pfad den parallelen Zweig und der andere Pfad den Kondensator durchströmt, und dann die beiden Strompfade konvergieren und nach dem Durchströmen des vierten Schalters zum Minuspol der Gleichstromquelle zurückkehren;
Steuern des ersten Schalters und des vierten Schalters, die nach einer gesteuerten Einschaltzeit auszuschalten sind, wobei die Steuerung des Ausgangsstroms und der zweiten Diode im zweiten Schaltelementsatz und der dritten Diode im dritten Schaltelementsatz, die einzuschalten sind, implementiert wird, und dann Steuern des zweiten Schalters im zweiten Schaltelementsatz und des dritten Schalters im dritten Schaltelementsatz, die einzuschalten sind, so dass der zweite Schalter und der dritte Schalter bei einer niedrigen Spannung eingeschalten werden; und
wenn ein Wert eines Stroms des ersten Induktors kleiner als ein voreingestellter Stromschwellenwert ist, Steuern des zweiten Schalters im zweiten Schaltersatz und des dritten Schalters im dritten Schaltersatz, der ausgeschaltet werden soll, und der ersten Diode im ersten Schaltersatz und der vierten Diode im vierten Schaltersatz, die eingeschaltet werden soll, und dann Steuern des ersten Schalters im ersten Schaltelementsatz und des vierten Schalters im vierten Schaltelementsatz, der eingeschaltet werden soll, um den nächsten Schaltzyklus zu starten, so dass der zweite Schalter und der dritte Schalter bei einem niedrigen Strom ausgeschaltet werden und der erste Schalter und der vierte Schalter bei einer niedrigen Spannung eingeschaltet werden.

11. Verfahren nach Anspruch 10, wobei der voreingestellte Stromschwellenwert kleiner als 1 A ist.

12. Verfahren nach Anspruch 10 oder 11, wobei die Wechselrichterschaltung ferner mindestens einen dritten Brückenarm umfasst, jeder des mindestens einen dritten Brückenarms einen fünften Schaltelementsatz und einen sechsten Schaltelementsatz umfasst, die in Reihe geschaltet sind, der fünfte Schaltelementsatz einen fünften Schalter und eine fünfte Diode umfasst, die parallel geschaltet sind, ein Minuspol der fünften Diode mit dem Pluspol der Gleichstromquelle verbunden ist, der sechste Schaltelementsatz einen sechsten Schalter und eine sechste Diode umfasst, die parallel geschaltet sind, und ein Pluspol der sechsten Diode mit dem Minuspol der Gleichstromquelle verbunden ist; und die Wechselrichterschaltung ferner mindestens einen dritten Induktor umfasst, wobei jeder dritte Induktor des mindestens einen dritten Induktors einem dritten Brückenarm des mindestens einen dritten Brückenarms entspricht; und ein Ende jedes dritten Induktors des mindestens einen dritten Induktors mit einer Schaltung zwischen dem fünften Schaltelementsatz und dem sechsten Schaltelementsatz des entsprechenden dritten Brückenarms verbunden ist, und das andere Ende mit einem Ende des ersten Induktors verbunden ist, wobei das eine Ende des ersten Induktors in der Nähe des Kondensators liegt, wobei das Verfahren ferner umfasst:
Annehmen einer Steuerungsweise, die dem ersten Schalter und der ersten Diode im ersten Schalterelementsatz entspricht, für den fünften Schalter und der mindestens einen fünften Diode im fünften Schalterelementsatz;
Annehmen einer Steuerungsweise, die dem zweiten Schalter und der zweiten Diode im zweiten Schalterelementsatz entspricht, für den sechsten Schalter und die mindestens eine sechste Diode im sechsten Schalterelementsatz; und
Annehmen einer Steuerungsweise, die dem ersten Induktor entspricht, für den mindestens einen dritten Induktor.

13. Verfahren nach Anspruch 12, ferner umfassend:
Steuern der Zeit, in der der Strom des ersten Induktors eine Spitze erreicht, um mit der Zeit, in der ein Strom des mindestens einen dritten Induktors eine Spitze erreicht, versetzt zu werden.

14. Wechselrichterschaltungs-Steuervorrichtung, umfassend eine Wechselrichterschaltung und ein Steuermodul; wobei
die Wechselrichterschaltung eine Gleichstromquelle, einen ersten Brückenarm und einen zweiten Brückenarm umfasst, wobei der erste Brückenarm mit einem Pluspol und einem Minuspol der Gleichstromquelle verbunden ist, der zweite Brückenarm mit dem Pluspol und dem Minuspol der Gleichstromquelle verbunden ist und der erste Brückenarm und der zweite Brückenarm parallel angeordnet sind; der erste Brückenarm einen ersten Schaltelementsatz und einen zweiten Schaltelementsatz umfasst, die in Reihe geschaltet sind, der erste Schaltelementsatz einen ersten Schalter und eine erste Diode umfasst, die parallel geschaltet sind, ein Minuspol der ersten Diode mit dem Pluspol der Gleichstromquelle verbunden ist, der zweite Schaltelementsatz einen zweiten Schalter und eine zweite Diode umfasst, die parallel geschaltet sind, und ein Pluspol der zweiten Diode mit dem Minuspol der Gleichstromquelle verbunden ist; der zweite Brückenarm einen dritten Schaltelementsatz und einen vierten Schaltelementsatz umfasst, die in Reihe geschaltet sind, der dritte Schaltelementsatz einen dritten Schalter und eine dritte Diode umfasst, die parallel geschaltet sind, ein Minuspol der dritten Diode mit dem Pluspol der Gleichstromquelle verbunden ist, der vierte Schaltelementsatz einen vierten Schalter und die vierte Diode umfasst, die parallel geschaltet sind, und ein Pluspol der vierten Diode mit dem Minuspol der Gleichstromquelle verbunden ist; und die Wechselrichterschaltung ferner eine Filterschaltung umfasst, wobei die Filterschaltung einen ersten Induktor und einen Kondensator umfasst, die in Reihe geschaltet sind, das andere Ende des ersten Induktors mit einer Schaltung zwischen dem ersten Schaltelementsatz und dem zweiten Schaltelementsatz des ersten Brückenarms verbunden ist, das andere Ende des Kondensators mit einer Schaltung zwischen dem dritten Schaltelementsatz und dem vierten Schaltelementsatz des zweiten Brückenarms verbunden ist, zwei Enden des Kondensators parallel zu einem parallelen Zweig verbunden sind und der parallele Zweig eine Wechselstromquelle oder eine Last umfasst;
**dadurch gekennzeichnet dass**
während einer ersten Zeitspanne eines Zyklus des Wechselrichters, Abschließen mehrerer Schaltzyklen, wobei während des jeweiligen Schaltzyklus:
das Steuermodul zum Steuern des ersten Schalters im ersten Schaltelementsatz und des vierten Schalters im vierten Schaltelementsatz, der eingeschaltet werden soll, konfiguriert ist, wobei ein Stromausgang durch den Pluspol der Gleichstromquelle, nachdem er den ersten Schalter und den ersten Induktor durchströmt hat, in zwei Pfade aufgeteilt ist, wobei der eine Pfad den parallelen Zweig und der andere Pfad den Kondensator durchströmt, und dann die beiden Pfade des Stroms konvergieren und zum Minuspol der Gleichstromquelle zurückkehren, nach Durchströmen des vierten Schalters;
das Steuermodul ferner zum Steuern des ersten Schalters, der nach einer gesteuerten Einschaltzeit ausgeschaltet werden soll, wobei die eine Steuerung des Ausgangsstroms und der zweiten Diode im zweiten Schaltelement, das eingeschaltet werden soll, implementiert wird, konfiguriert ist, und dann den zweiten Schalter im zweiten Schaltelement, das eingeschaltet werden soll, so zu steuern, dass der zweite Schalter bei einer niedrigen Spannung eingeschaltet wird; und
wenn ein Wert eines Stroms des ersten Induktors kleiner als ein voreingestellter Stromschwellenwert ist, das Steuermodul ferner zum Steuern des zweiten Schalters in dem zweiten Schaltelementsatz, der ausgeschaltet werden soll, und die erste Diode in dem ersten Schaltelementsatz, der eingeschaltet werden soll, konfiguriert ist, und dann den ersten Schalter in dem ersten Schaltelementsatz, der eingeschaltet werden soll, um den nächsten Schaltzyklus zu starten, so zu steuern, dass der zweite Schalter bei einem niedrigen Strom ausgeschaltet wird und der erste Schalter bei einer niedrigen Spannung eingeschaltet wird.

15. Wechselrichterschaltungs-Steuervorrichtung, umfassend eine Wechselrichterschaltung und ein Steuermodul; wobei
die Wechselrichterschaltung eine Gleichstromquelle, einen ersten Brückenarm und einen zweiten Brückenarm umfasst, wobei der erste Brückenarm mit einem Pluspol und einem Minuspol der Gleichstromquelle verbunden ist, der zweite Brückenarm mit dem Pluspol und dem Minuspol der Gleichstromquelle verbunden ist, und der erste Brückenarm und der zweite Brückenarm parallel angeordnet sind; der erste Brückenarm einen ersten Schaltelementsatz und einen zweiten Schaltelementsatz umfasst, die in Reihe geschaltet sind, der erste Schaltelementsatz einen ersten Schalter und eine erste Diode umfasst, die parallel geschaltet sind, ein Minuspol der ersten Diode mit dem Pluspol der Gleichstromquelle verbunden ist, der zweite Schaltelementsatz einen zweiten Schalter und eine zweite Diode umfasst, die parallel geschaltet sind, und ein Pluspol der zweiten Diode mit dem Minuspol der Gleichstromquelle verbunden ist; der zweite Brückenarm einen dritten Schaltelementsatz und einen vierten Schaltelementsatz umfasst, die in Reihe geschaltet sind, der dritte Schaltelementsatz einen dritten Schalter und eine dritte Diode umfasst, die parallel geschaltet sind, ein Minuspol der dritten Diode mit dem Pluspol der Gleichstromquelle verbunden ist, der vierte Schaltelementsatz einen vierten Schalter und eine vierte Diode umfasst, die parallel geschaltet sind, und ein Pluspol der vierten Diode mit dem Minuspol der Gleichstromquelle verbunden ist; und die Wechselrichterschaltung ferner eine Filterschaltung umfasst, wobei die Filterschaltung einen ersten Induktor und einen Kondensator umfasst, die in Reihe geschaltet sind, das andere Ende des ersten Induktors mit einer Schaltung zwischen dem ersten Schaltelementsatz und dem zweiten Schaltelementsatz des ersten Brückenarms verbunden ist, das andere Ende des Kondensators mit einer Schaltung zwischen dem dritten Schaltelementsatz und dem vierten Schaltelementsatz des zweiten Brückenarms verbunden ist, zwei Enden des Kondensators parallel zu einem parallelen Zweig verbunden sind und der parallele Zweig eine Wechselstromquelle oder eine Last umfasst;
**dadurch gekennzeichnet dass**
während einer ersten Zeitspanne eines Zyklus des Wechselrichters, Abschließen mehrerer Schaltzyklen, wobei während des jeweiligen Schaltzyklus:
das Steuermodul zum Steuern des ersten Schalters im ersten Schaltelementsatz und des vierten Schalters im vierten Schaltelementsatz, der eingeschaltet werden soll, konfiguriert ist, wobei ein Stromausgang durch den Pluspol der Gleichstromquelle, nachdem er den ersten Schalter und den ersten Induktor durchströmt hat, in zwei Pfade aufgeteilt ist, wobei der eine Pfad den parallelen Zweig und der andere Pfad den Kondensator durchströmt, und dann die beiden Pfade des Stroms konvergieren und zum Minuspol der Gleichstromquelle zurückkehren, nach Durchströmen des vierten Schalters; und
das Steuermodul ferner zum Steuern des ersten Schalters und des vierten Schalters, die nach einer gesteuerten Einschaltzeit ausgeschalten werden sollen, wobei eine Steuerung des Ausgangsstroms und der zweiten Diode im zweiten Schaltelementsatz und der dritten Diode im dritten Schaltelementsatz, die eingeschaltet werden sollen, implementiert wird, konfiguriert ist, und dann den zweiten Schalter im zweiten Schaltelementsatz und den dritten Schalter im dritten Schaltelementsatz, der eingeschaltet werden soll, so zu steuern, dass der zweite Schalter und der dritte Schalter bei einer niedrigen Spannung eingeschaltet werden; und
wenn ein Wert eines Stroms des ersten Induktors kleiner als ein voreingestellter Stromschwellenwert ist, das Steuermodul ferner zum Steuern des zweiten Schalters im zweiten Schaltelementsatz und des dritten Schalters im dritten Schaltelementsatz, der ausgeschaltet werden soll, und der ersten Diode im ersten Schaltelementsatz und der vierten Diode im vierten Schaltelementsatz, die eingeschaltet werden sollen, konfiguriert ist, und dann den ersten Schalter im ersten Schaltelementsatz und den vierten Schalter im vierten Schaltelementsatz, der eingeschaltet werden soll, um den nächsten Schaltzyklus zu starten, so steuern, dass der zweite Schalter und der dritte Schalter bei einem niedrigen Strom ausgeschaltet werden und der erste Schalter und der vierte Schalter bei einer niedrigen Spannung eingeschaltet werden.

## Revendications

1. Procédé de commande du circuit inverseur, le circuit inverseur comprenant une source de courant continu, une première branche de pont et une deuxième branche de pont, la première branche de pont étant connectée respectivement à un pôle positif et à un pôle négatif de la source de courant continu, la deuxième branche de pont étant connectée respectivement au pôle positif et au pôle négatif de la source de courant continu, et la première branche de pont et la deuxième branche de pont étant disposées en parallèle ; la première branche de pont comprenant un premier ensemble d'éléments de commutation et un deuxième ensemble d'éléments de commutation qui sont connectés en série, le premier ensemble d'éléments de commutation comprenant un premier commutateur et une première diode qui sont connectés en parallèle, un pôle négatif de la première diode étant connecté au pôle positif de la source de courant continu, le deuxième ensemble d'éléments de commutation comprenant un deuxième commutateur et une deuxième diode qui sont connectés en parallèle, et un pôle positif de la deuxième diode étant connecté au pôle négatif de la source de courant continu ; la deuxième branche de pont comprenant un troisième ensemble d'éléments de commutation et un quatrième ensemble d'éléments de commutation qui sont connectés en série, le troisième ensemble d'éléments de commutation comprenant un troisième commutateur et une troisième diode qui sont connectés en parallèle, un pôle négatif de la troisième diode étant connecté au pôle positif de la source de courant continu, le quatrième ensemble d'éléments de commutation comprenant un quatrième commutateur et une quatrième diode qui sont connectés en parallèle, et un pôle positif de la quatrième diode étant connecté au pôle négatif de la source de courant continu ; et le circuit inverseur comprenant en outre un circuit filtrant, le circuit filtrant comprenant une première inductance et un condensateur qui sont connectés en série, l'autre extrémité de la première inductance étant connectée à un circuit entre le premier ensemble d'éléments de commutation et le deuxième ensemble d'éléments de commutation de la première branche de pont, l'autre extrémité du condensateur étant connectée à un circuit entre le troisième ensemble d'éléments de commutation et le quatrième ensemble d'éléments de commutation de la deuxième branche de pont, deux extrémités du condensateur étant connectées en parallèle à une branche parallèle, et la branche parallèle comprenant une source de courant alternatif ou une charge, le procédé consistant à :
pendant une première période de temps d'un cycle de l'inverseur, réaliser de multiples cycles de commutation, et pendant chacun desdits cycles de commutation le procédé consistant à :
commander le passage à l'état passant du premier commutateur dans le premier ensemble d'éléments de commutation et du quatrième commutateur dans le quatrième ensemble d'éléments de commutation, un courant émis par le pôle positif de la source de courant continu, après avoir traversé le premier commutateur et la première inductance, étant divisé en deux chemins, un chemin traversant la branche parallèle et l'autre chemin traversant le condensateur, puis les deux chemins de courant convergeant et retournant vers le pôle négatif de la source de courant continu après avoir traversé le quatrième commutateur ;
commander le passage à l'état non passant du premier commutateur après une commande de mise en oeuvre de temps à l'état passant commandé sur le courant émis et le passage à l'état passant de la deuxième diode dans le deuxième ensemble d'éléments de commutation, puis commander le passage à l'état passant du deuxième commutateur dans le deuxième ensemble d'éléments de commutation, de sorte que le deuxième commutateur passe à l'état passant à une basse tension ; et
quand une valeur d'un courant de la première inductance est inférieure à un seuil de courant prédéfini, commander le passage à l'état non passant du deuxième commutateur dans le deuxième ensemble d'éléments de commutation et le passage à l'état passant de la première diode dans le premier ensemble d'éléments de commutation, puis commander le passage à l'état passant du premier commutateur dans le premier ensemble d'éléments de commutation au démarrage du cycle de commutation suivant, de sorte que le deuxième commutateur passe à l'état non passant à un bas courant et que le premier commutateur passe à l'état passant à une basse tension.

2. Procédé selon la revendication 1, dans lequel le seuil de courant prédéfini est inférieur à 1 A.

3. Procédé selon la revendication 2, consistant en outre à :
quand la branche parallèle connectée en parallèle à deux extrémités du condensateur comprend une source de courant alternatif, commander le passage à l'état passant du deuxième commutateur dans le deuxième ensemble d'éléments de commutation et du quatrième commutateur dans le quatrième ensemble d'éléments de commutation, un chemin de courant émis par la source de courant alternatif traversant le condensateur et retournant vers un pôle négatif de la source de courant alternatif, et l'autre chemin traversant la première inductance, le deuxième commutateur et le quatrième commutateur et retournant vers le pôle négatif de la source de courant alternatif ; et
commander le passage à l'état non passant du deuxième commutateur et le passage à l'état passant de la première diode dans le premier ensemble d'éléments de commutation, puis commander le passage à l'état passant du premier commutateur dans le premier ensemble d'éléments de commutation, de sorte que le premier commutateur passe à l'état passant à une basse tension.

4. Procédé selon la revendication 3, consistant en outre à :
quand la valeur du courant de la première inductance est inférieure au seuil de courant prédéfini, commander le passage à l'état non passant du premier commutateur dans le premier ensemble d'éléments de commutation et le passage à l'état passant de la deuxième diode dans le deuxième ensemble d'éléments de commutation, puis faire passer à l'état passant le deuxième commutateur dans le deuxième ensemble d'éléments de commutation, de sorte que le premier commutateur passe à l'état non passant à un bas courant et que le deuxième commutateur passe à l'état passant à une basse tension.

5. Procédé selon la revendication 1, consistant en outre à :
commander le passage à l'état passant du deuxième commutateur dans le deuxième ensemble d'éléments de commutation et du troisième commutateur dans le troisième ensemble d'éléments de commutation, un courant émis par le pôle positif de la source de courant continu, après avoir traversé le troisième commutateur, étant divisé en deux chemins, un chemin traversant la branche parallèle et l'autre chemin traversant le condensateur, puis les deux chemins de courant se mélangeant et retournant vers le pôle négatif de la source de courant continu après avoir traversé la première inductance et le deuxième commutateur ;
commander le passage à l'état non passant du troisième commutateur et le passage à l'état passant de la quatrième diode dans le quatrième ensemble d'éléments de commutation, puis commander le passage à l'état passant du quatrième commutateur dans le quatrième ensemble d'éléments de commutation, de sorte que le quatrième commutateur passe à l'état passant à une basse tension.

6. Procédé selon la revendication 5, consistant en outre à :
quand la valeur du courant de la première inductance est inférieure au seuil de courant prédéfini, commander le passage à l'état non passant du quatrième commutateur dans le quatrième ensemble d'éléments de commutation et le passage à l'état passant de la troisième diode dans le troisième ensemble d'éléments de commutation, puis commander le passage à l'état passant du troisième commutateur dans le troisième ensemble d'éléments de commutation, de sorte que le quatrième commutateur passe à l'état non passant à un bas courant et que le troisième commutateur passe à l'état passant à une basse tension.

7. Procédé selon la revendication 1, consistant en outre à :
quand la branche parallèle connectée en parallèle à deux extrémités du condensateur comprend une source de courant alternatif, commander le passage à l'état passant du deuxième commutateur dans le deuxième ensemble d'éléments de commutation et du quatrième commutateur dans le quatrième ensemble d'éléments de commutation, un chemin de courant émis par la source de courant alternatif traversant le condensateur et retournant vers un pôle négatif de la source de courant alternatif, et l'autre chemin traversant le quatrième commutateur, le deuxième commutateur et la première inductance et retournant vers le pôle négatif de la source de courant alternatif ; et
après un temps prédéterminé, commander le passage à l'état non passant du quatrième commutateur et le passage à l'état passant de la troisième diode dans le troisième ensemble d'éléments de commutation, puis commander le passage à l'état passant du troisième commutateur dans le troisième ensemble d'éléments de commutation, de sorte que le troisième commutateur passe à l'état passant à une basse tension.

8. Procédé selon la revendication 7, consistant en outre à :
quand la valeur du courant de la première inductance est inférieure au seuil de courant prédéfini, commander le passage à l'état non passant du troisième commutateur dans le troisième ensemble d'éléments de commutation et le passage à l'état passant de la quatrième diode dans le quatrième ensemble d'éléments de commutation, puis faire passer à l'état passant le quatrième commutateur dans le quatrième ensemble d'éléments de commutation, de sorte que le quatrième commutateur passe à l'état non passant à un bas courant et que le deuxième commutateur passe à l'état passant à une basse tension.

9. Procédé selon l'une quelconque des revendications 1 à 8, dans lequel le circuit inverseur comprend au moins une troisième branche de pont, chaque branche de pont de l'au moins une troisième branche de pont comprenant un cinquième ensemble d'éléments de commutation et un sixième ensemble d'éléments de commutation qui sont connectés en série, le cinquième ensemble d'éléments de commutation comprenant un cinquième commutateur et une cinquième diode qui sont connectés en parallèle, un pôle négatif de la cinquième diode étant connecté au pôle positif de la source de courant continu, le sixième ensemble d'éléments de commutation comprenant un sixième commutateur et une sixième diode qui sont connectés en parallèle, et un pôle positif de la sixième diode étant connecté au pôle négatif de la source de courant continu ; et le circuit inverseur comprenant en outre au moins une troisième inductance, chaque troisième inductance de l'au moins une troisième inductance correspondant à une troisième branche de pont de l'au moins une troisième branche de pont ; et une extrémité de chaque troisième inductance de l'au moins une troisième inductance étant connectée à un circuit entre le cinquième ensemble d'éléments de commutation et le sixième ensemble d'éléments de commutation de la troisième branche de pont correspondante, et l'autre extrémité étant connectée à une extrémité de la première inductance, ladite extrémité de la première inductance étant à proximité du condensateur, et le procédé consistant en outre à :
adopter un mode de commande, qui correspond au premier commutateur et à la première diode dans le premier ensemble d'éléments de commutation, pour le cinquième commutateur et l'au moins une cinquième diode dans le cinquième ensemble d'éléments de commutation ;
adopter un mode de commande, qui correspond au deuxième commutateur et à la deuxième diode dans le deuxième ensemble d'éléments de commutation, pour le sixième commutateur et l'au moins une sixième diode dans le sixième ensemble d'éléments de commutation ; et
adopter un mode de commande, qui correspond à la première inductance, pour l'au moins une troisième inductance.

10. Procédé de commande du circuit inverseur, le circuit inverseur comprenant une source de courant continu, une première branche de pont et une deuxième branche de pont, la première branche de pont étant connectée respectivement à un pôle positif et à un pôle négatif de la source de courant continu, la deuxième branche de pont étant connectée respectivement au pôle positif et au pôle négatif de la source de courant continu, et la première branche de pont et la deuxième branche de pont étant disposées en parallèle ; la première branche de pont comprenant un premier ensemble d'éléments de commutation et un deuxième ensemble d'éléments de commutation qui sont connectés en série, le premier ensemble d'éléments de commutation comprenant un premier commutateur et une première diode qui sont connectés en parallèle, un pôle négatif de la première diode étant connecté au pôle positif de la source de courant continu, le deuxième ensemble d'éléments de commutation comprenant un deuxième commutateur et une deuxième diode qui sont connectés en parallèle, et un pôle positif de la deuxième diode étant connecté au pôle négatif de la source de courant continu ; la deuxième branche de pont comprenant un troisième ensemble d'éléments de commutation et un quatrième ensemble d'éléments de commutation qui sont connectés en série, le troisième ensemble d'éléments de commutation comprenant un troisième commutateur et une troisième diode qui sont connectés en parallèle, un pôle négatif de la troisième diode étant connecté au pôle positif de la source de courant continu, le quatrième ensemble d'éléments de commutation comprenant un quatrième commutateur et une quatrième diode qui sont connectés en parallèle, et un pôle positif de la quatrième diode étant connecté au pôle négatif de la source de courant continu ; et le circuit inverseur comprenant en outre un circuit filtrant, le circuit filtrant comprenant une première inductance et un condensateur qui sont connectés en série, l'autre extrémité de la première inductance étant connectée à un circuit entre le premier ensemble d'éléments de commutation et le deuxième ensemble d'éléments de commutation de la première branche de pont, l'autre extrémité du condensateur étant connectée à un circuit entre le troisième ensemble d'éléments de commutation et le quatrième ensemble d'éléments de commutation de la deuxième branche de pont, deux extrémités du condensateur étant connectées en parallèle à une branche parallèle, et la branche parallèle comprenant une source de courant alternatif ou une charge, le procédé consistant à :
pendant une première période de temps d'un cycle de l'inverseur, réaliser de multiples cycles de commutation, et pendant chacun desdits cycles de commutation le procédé consistant à :
commander le passage à l'état passant du premier commutateur dans le premier ensemble d'éléments de commutation et du quatrième commutateur dans le quatrième ensemble d'éléments de commutation, un courant émis par le pôle positif de la source de courant continu, après avoir traversé le premier commutateur et la première inductance, étant divisé en deux chemins, un chemin traversant la branche parallèle et l'autre chemin traversant le condensateur, puis les deux chemins de courant convergeant et retournant vers le pôle négatif de la source de courant continu après avoir traversé le quatrième commutateur ;
commander le passage à l'état non passant du premier commutateur et du quatrième commutateur après une commande de mise en oeuvre de temps à l'état passant commandé sur le courant émis et le passage à l'état passant de la deuxième diode dans le deuxième ensemble d'éléments de commutation et de la troisième diode dans le troisième ensemble d'éléments de commutation, puis commander le passage à l'état passant du deuxième commutateur dans le deuxième ensemble d'éléments de commutation et du troisième commutateur dans le troisième ensemble d'éléments de commutation, de sorte que le deuxième commutateur et le troisième commutateur passent à l'état passant à une basse tension ; et
quand une valeur d'un courant de la première inductance est inférieure à un seuil de courant prédéfini, commander le passage à l'état non passant du deuxième commutateur dans le deuxième ensemble d'éléments de commutation et du troisième commutateur dans le troisième ensemble d'éléments de commutation et le passage à l'état passant de la première diode dans le premier ensemble d'éléments de commutation et de la quatrième diode dans le quatrième ensemble d'éléments de commutation, puis commander le passage à l'état passant du premier commutateur dans le premier ensemble d'éléments de commutation et du quatrième commutateur dans le quatrième ensemble d'éléments de commutation au démarrage du cycle de commutation suivant, de sorte que le deuxième commutateur et le troisième commutateur passent à l'état non passant à un bas courant et que le premier commutateur et le quatrième commutateur passent à l'état passant à une basse tension.

11. Procédé selon la revendication 10, dans lequel le seuil de courant prédéfini est inférieur à 1 A.

12. Procédé selon la revendication 10 ou 11, dans lequel le circuit inverseur comprend au moins une troisième branche de pont, chaque branche de pont de l'au moins une troisième branche de pont comprenant un cinquième ensemble d'éléments de commutation et un sixième ensemble d'éléments de commutation qui sont connectés en série, le cinquième ensemble d'éléments de commutation comprenant un cinquième commutateur et une cinquième diode qui sont connectés en parallèle, un pôle négatif de la cinquième diode étant connecté au pôle positif de la source de courant continu, le sixième ensemble d'éléments de commutation comprenant un sixième commutateur et une sixième diode qui sont connectés en parallèle, et un pôle positif de la sixième diode étant connecté au pôle négatif de la source de courant continu ; et le circuit inverseur comprenant en outre au moins une troisième inductance, chaque troisième inductance de l'au moins une troisième inductance correspondant à une troisième branche de pont de l'au moins une troisième branche de pont ; et une extrémité de chaque troisième inductance de l'au moins une troisième inductance étant connectée à un circuit entre le cinquième ensemble d'éléments de commutation et le sixième ensemble d'éléments de commutation de la troisième branche de pont correspondante, et l'autre extrémité étant connectée à une extrémité de la première inductance, ladite extrémité de la première inductance étant à proximité du condensateur ; le procédé consistant en outre à :
adopter un mode de commande, qui correspond au premier commutateur et à la première diode dans le premier ensemble d'éléments de commutation, pour le cinquième commutateur et l'au moins une cinquième diode dans le cinquième ensemble d'éléments de commutation ;
adopter un mode de commande, qui correspond au deuxième commutateur et à la deuxième diode dans le deuxième ensemble d'éléments de commutation, pour le sixième commutateur et l'au moins une sixième diode dans le sixième ensemble d'éléments de commutation ; et
adopter un mode de commande, qui correspond à la première inductance, pour l'au moins une troisième inductance.

13. Procédé selon la revendication 12, consistant en outre à :
commander un temps que met le courant de la première inductance pour atteindre un pic à étager avec un temps que met un courant de l'au moins une troisième inductance pour atteindre un pic.

14. Dispositif de contrôle de circuit inverseur, comprenant un circuit inverseur et un module de contrôle ; et dans lequel :
le circuit inverseur comprend une source de courant continu, une première branche de pont et une deuxième branche de pont, la première branche de pont étant connectée à un pôle positif et à un pôle négatif de la source de courant continu, la deuxième branche de pont étant connectée au pôle positif et au pôle négatif de la source de courant continu, et la première branche de pont et la deuxième branche de pont étant disposées en parallèle ; la première branche de pont comprenant un premier ensemble d'éléments de commutation et un deuxième ensemble d'éléments de commutation qui sont connectés en série, le premier ensemble d'éléments de commutation comprenant un premier commutateur et une première diode qui sont connectés en parallèle, un pôle négatif de la première diode étant connecté au pôle positif de la source de courant continu, le deuxième ensemble d'éléments de commutation comprenant un deuxième commutateur et une deuxième diode qui sont connectés en parallèle, et un pôle positif de la deuxième diode étant connecté au pôle négatif de la source de courant continu ; la deuxième branche de pont comprenant un troisième ensemble d'éléments de commutation et un quatrième ensemble d'éléments de commutation qui sont connectés en série, le troisième ensemble d'éléments de commutation comprenant un troisième commutateur et une troisième diode qui sont connectés en parallèle, un pôle négatif de la troisième diode étant connecté au pôle positif de la source de courant continu, le quatrième ensemble d'éléments de commutation comprenant un quatrième commutateur et une quatrième diode qui sont connectés en parallèle, et un pôle positif de la quatrième diode étant connecté au pôle négatif de la source de courant continu ; et le circuit inverseur comprenant en outre un circuit filtrant, le circuit filtrant comprenant une première inductance et un condensateur qui sont connectés en série, l'autre extrémité de la première inductance étant connectée à un circuit entre le premier ensemble d'éléments de commutation et le deuxième ensemble d'éléments de commutation de la première branche de pont, l'autre extrémité du condensateur étant connectée à un circuit entre le troisième ensemble d'éléments de commutation et le quatrième ensemble d'éléments de commutation de la deuxième branche de pont, deux extrémités du condensateur étant connectées en parallèle à une branche parallèle, et la branche parallèle comprenant une source de courant alternatif ou une charge ;
le dispositif étant **caractérisé en ce que** :
pendant une première période de temps d'un cycle de l'inverseur, de multiples cycles de commutation sont réalisés, et pendant chacun desdits cycles de commutation :
le module de commande est configuré pour commander le passage à l'état passant du premier commutateur dans le premier ensemble d'éléments de commutation et du quatrième commutateur dans le quatrième ensemble d'éléments de commutation, un courant émis par le pôle positif de la source de courant continu, après avoir traversé le premier commutateur et la première inductance, étant divisé en deux chemins, un chemin traversant la branche parallèle et l'autre chemin traversant le condensateur, puis les deux chemins de courant convergeant et retournant vers le pôle négatif de la source de courant continu après avoir traversé le quatrième commutateur ;
le module de commande est en outre configuré pour commander le passage à l'état non passant du premier commutateur après une commande de mise en oeuvre de temps à l'état passant commandé sur le courant émis et le passage à l'état passant de la deuxième diode dans le deuxième ensemble d'éléments de commutation, puis commander le passage à l'état passant du deuxième commutateur dans le deuxième ensemble d'éléments de commutation, de sorte que le deuxième commutateur passe à l'état passant à une basse tension ; et
quand une valeur d'un courant de la première inductance est inférieure à un seuil de courant prédéfini, le module de commande est en outre configuré pour commander le passage à l'état non passant du deuxième commutateur dans le deuxième ensemble d'éléments de commutation et le passage à l'état passant de la première diode dans le premier ensemble d'éléments de commutation, puis commander le passage à l'état passant du premier commutateur dans le premier ensemble d'éléments de commutation au démarrage du cycle de commutation suivant, de sorte que le deuxième commutateur passe à l'état non passant à un bas courant et que le premier commutateur passe à l'état passant à une basse tension.

15. Dispositif de contrôle de circuit inverseur, comprenant un circuit inverseur et un module de contrôle ; et dans lequel :
le circuit inverseur comprend une source de courant continu, une première branche de pont et une deuxième branche de pont, la première branche de pont étant connectée à un pôle positif et à un pôle négatif de la source de courant continu, la deuxième branche de pont étant connectée au pôle positif et au pôle négatif de la source de courant continu, et la première branche de pont et la deuxième branche de pont étant disposées en parallèle ; la première branche de pont comprenant un premier ensemble d'éléments de commutation et un deuxième ensemble d'éléments de commutation qui sont connectés en série, le premier ensemble d'éléments de commutation comprenant un premier commutateur et une première diode qui sont connectés en parallèle, un pôle négatif de la première diode étant connecté au pôle positif de la source de courant continu, le deuxième ensemble d'éléments de commutation comprenant un deuxième commutateur et une deuxième diode qui sont connectés en parallèle, et un pôle positif de la deuxième diode étant connecté au pôle négatif de la source de courant continu ; la deuxième branche de pont comprenant un troisième ensemble d'éléments de commutation et un quatrième ensemble d'éléments de commutation qui sont connectés en série, le troisième ensemble d'éléments de commutation comprenant un troisième commutateur et une troisième diode qui sont connectés en parallèle, un pôle négatif de la troisième diode étant connecté au pôle positif de la source de courant continu, le quatrième ensemble d'éléments de commutation comprenant un quatrième commutateur et une quatrième diode qui sont connectés en parallèle, et un pôle positif de la quatrième diode étant connecté au pôle négatif de la source de courant continu ; et le circuit inverseur comprenant en outre un circuit filtrant, le circuit filtrant comprenant une première inductance et un condensateur qui sont connectés en série, l'autre extrémité de la première inductance étant connectée à un circuit entre le premier ensemble d'éléments de commutation et le deuxième ensemble d'éléments de commutation de la première branche de pont, l'autre extrémité du condensateur étant connectée à un circuit entre le troisième ensemble d'éléments de commutation et le quatrième ensemble d'éléments de commutation de la deuxième branche de pont, deux extrémités du condensateur étant connectées en parallèle à une branche parallèle, et la branche parallèle comprenant une source de courant alternatif ou une charge ;
le dispositif étant **caractérisé en ce que** :
pendant une première période de temps d'un cycle de l'inverseur, de multiples cycles de commutation sont réalisés, et pendant chacun desdits cycles de commutation :
le module de commande est configuré pour commander le passage à l'état passant du premier commutateur dans le premier ensemble d'éléments de commutation et du quatrième commutateur dans le quatrième ensemble d'éléments de commutation, un courant émis par le pôle positif de la source de courant continu, après avoir traversé le premier commutateur et la première inductance, étant divisé en deux chemins, un chemin traversant la branche parallèle et l'autre chemin traversant le condensateur, puis les deux chemins de courant convergeant et retournant vers le pôle négatif de la source de courant continu après avoir traversé le quatrième commutateur ; et
le module de commande est en outre configuré pour commander le passage à l'état non passant du premier commutateur et du quatrième commutateur après une commande de mise en oeuvre de temps à l'état passant commandé sur le courant émis et le passage à l'état passant de la deuxième diode dans le deuxième ensemble d'éléments de commutation et de la troisième diode dans le troisième ensemble d'éléments de commutation, puis commander le passage à l'état passant du deuxième commutateur dans le deuxième ensemble d'éléments de commutation et du troisième commutateur dans le troisième ensemble d'éléments de commutation, de sorte que le deuxième commutateur et le troisième commutateur passent à l'état passant à une basse tension ; et
quand une valeur d'un courant de la première inductance est inférieure à un seuil de courant prédéfini, le module de commande est en outre configuré pour commander le passage à l'état non passant du deuxième commutateur dans le deuxième ensemble d'éléments de commutation et du troisième commutateur dans le troisième ensemble d'éléments de commutation et le passage à l'état passant de la première diode dans le premier ensemble d'éléments de commutation et de la quatrième diode dans le quatrième ensemble d'éléments de commutation, puis commander le passage à l'état passant du premier commutateur dans le premier ensemble d'éléments de commutation et du quatrième commutateur dans le quatrième ensemble d'éléments de commutation au démarrage du cycle de commutation suivant, de sorte que le deuxième commutateur et le troisième commutateur passent à l'état non passant à un bas courant et que le premier commutateur et le quatrième commutateur passent à l'état passant à une basse tension.
